# EUROPÄISCHE PATENTANMELDUNG

(11) **EP 4 674 330 A2**
(43) Veröffentlichungstag der Anmeldung: **07.01.2026**
(21) Anmeldenummer: 25218065.8
(22) Anmeldetag: 07.03.2022
(51) Int. Cl.: A47J 43/046

(54) **GEFÄSSANORDNUNG FÜR EIN KÜCHENGERÄT**

(62) Teilanmeldung aus: 22160543.9
(71) Anmelder: Vorwerk & Co. Interholding GmbH, 42275 Wuppertal (DE)
(72) Erfinder: Jansen, Sebastian, 44803 Bochum (DE); Beckmann, Nils, 42857 Remscheid (DE)
(74) Vertreter: Cohausz & Florack

(57) **Zusammenfassung**

Die Anmeldung betrifft eine Gefäßanordnung für ein Küchengerät, umfassend ein Speiseaufnahmeelement und mindestens einen Deckel, eingerichtet zum Verschließen einer Öffnung des Speiseaufnahmeelements, wobei der Deckel relativ zu dem Speiseaufnahmeelement zwischen einer ersten Betriebsposition und einer zweiten sich von der ersten Betriebsposition unterscheidenden Betriebsposition bewegbar ist, wobei der Deckel mindestens ein erstes magnetfeldbasiertes Gegenelement und das Speiseaufnahmeelement mindestens ein mit einer Detektionseinrichtung verbindbares magnetfeldbasiertes Sensorelement aufweist, wobei die Detektionseinrichtung eingerichtet ist zum Detektieren eines zweiten Betriebszustands des Deckels, wobei das magnetfeldbasierte Sensorelement eingerichtet ist zum Ausgeben des ersten Sensordatums nur bei einer Detektion des ersten magnetfeldbasierten Gegenelements in dem Erfassungsbereich des magnetfeldbasierten Sensorelements, wobei das erste magnetfeldbasierte Gegenelement in dem Deckel derart angeordnet ist, dass das magnetfeldbasierte Gegenelement nur dann in dem Erfassungsbereich des magnetfeldbasierten Sensorelements ist, wenn sich der Deckel in der zweiten Betriebsposition befindet.

## Beschreibung

Die Anmeldung betrifft eine Gefäßanordnung für ein Küchengerät, umfassend ein Speiseaufnahmeelement und einen hierzu korrespondierenden Deckel. Darüber hinaus betrifft die Anmeldung ein Küchengerät und ein Verfahren.

Aus dem Stand der Technik sind Küchenmaschinen bekannt, die zum zumindest teilautomatischen Zubereiten von Speisen eingerichtet sind. Derartige Küchenmaschinen, aber auch andere Küchengeräte, können mindestens eine Gefäßanordnung umfassen. Eine Gefäßanordnung kann ein Speiseaufnahmeelement, beispielsweise in Form eines Topfs, und mindestens einen Deckel umfassen. Der Deckel ist eingerichtet zum Verschließen bzw. Abdecken der Topföffnung. Der Deckel kann auch weitere Funktionen während der Speisenzubereitung ermöglichen bzw. dafür genutzt werden.

Insbesondere kann es für einen sicheren Betrieb eines Küchengeräts erforderlich sein, dass der Deckel mit dem Speiseaufnahmeelement in einer bestimmten Betriebsposition ist, insbesondere verriegelt werden kann. Aus dem Stand der Technik ist es daher bekannt, dass ein Deckel relativ zu dem Speiseaufnahmeelement von einer ersten Betriebsposition, wie eine unverriegelte Betriebsposition, in eine zweite Betriebsposition, wie eine verriegelte Betriebsposition, bewegbar ist. Beispielsweise kann der Nutzer den Deckel entsprechend bewegen oder das Küchengerät kann einen Deckelantrieb umfassen, eingerichtet zum (automatischen) Verfahren eines Deckels zumindest zwischen der unverriegelten Position und der verriegelten Position.

Die Durchführung einer bestimmten Küchengerätefunktion durch ein Küchengerät ist regelmäßig nur dann zulässig, wenn sich ein Deckel auf dem Speiseaufnahmeelement in einer bestimmten Betriebsposition, insbesondere der verriegelten Position, befindet, also die Gefäßanordnung in einem zweiten Betriebszustand ist, insbesondere dem Verriegelungszustand.

Zum Erkennen bzw. Erfassen eines Verriegelungszustands einer Gefäßanordnung ist es aus dem Stand der Technik bekannt, Mikroschalter einzusetzen. Beispielsweise kann eine Erkennung der Verriegelungsposition des Deckels durch Abfrage der Position von Verriegelungswalzen des Speiseaufnahmeelements/Deckels über Mikroschalter in Kombination mit einer Auswertung des Strombedarfs des Deckelantriebs erfolgen. Zusätzlich kommt in der Regel noch ein Mikroschalter zum Einsatz, der durch einen verriegelten Deckel betätigt werden muss.

Ferner sind aus dem Stand der Technik Konzepte bekannt, die ebenfalls über elektrische Schalter einen in der Verriegelungsposition befindlichen Deckel detektieren. Ein solcher elektrischer Schalter wird je nach Küchengerät direkt durch den Deckel oder indirekt über mechanische Stößel, Hebel oder ähnliches betätigt.

Diese Detektionsmechanismen haben jedoch verschiedenste Nachteile. Insbesondere ist der Aufwand einer Implementierung aufwendig. Dies gilt besonders für den Fall, wenn das Küchengerät eine Mehrzahl von Gefäßanordnungen und/oder die Gefäßanordnung eine Mehrzahl von Deckeln umfasst.

Um bei den bekannten Detektionsmechanismen die Verriegelungsinformation von einem Deckelbereich zu einer in einer Gerätebasis angeordneten Detektionseinrichtung zu übertragen, muss ein Übertragungspfad vorgesehen sein, der die Verriegelungsinformation an die entsprechende Einkopplungsstelle der Gerätebasis überträgt. Ferner muss die Verriegelungsinformation in Form eines oder mehrerer elektrischer Signale bereitgestellt werden, damit die Detektionseinrichtung diese Information auswerten kann, um den Verriegelungszustand detektieren zu können.

Die verschiedenen, bekannten Detektionsmechanismen können im Wesentlichen in zwei Gruppen eingeteilt werden. Die Einteilung kann insbesondere davon abhängen, an welcher Stelle des Küchengeräts das elektrische Signal generiert wird, welches die Verriegelungsinformation (d.h. insbesondere: Deckel ist in der Verriegelungsposition) enthält und/oder diese repräsentiert.

Bei der ersten Gruppe wird die Verriegelungsinformation zwischen der Gefäßanordnung und der Gerätebasis des Küchengeräts auf mechanischem Weg übertragen. Die Umwandlung in ein elektrisches Signal erfolgt erst in der Gerätebasis.

Ein entsprechender Detektionsmechanismus ist, insbesondere bei verschiedenen Topf- bzw. Speiseaufnahmeelementdurchmessern, mit der Herausforderung verbunden, die mechanische Bewegung an die richtige Position der Gerätebasis zu übertragen. Die hierzu erforderlichen mechanischen Übertragungselemente unterliegen aufgrund der bewegten Teile einem hohen Verschmutzungsrisiko. In besonders ungünstigen Fällen kann eine Verschmutzung zu einem Klemmen und/oder Blockieren des mechanischen Mechanismus führen. Dies wiederum kann zu einer fehlerhaften Verriegelungsdetektion führen.

Hinzu kommt, dass die Reinigung des mechanischen Mechanismus Schwierigkeiten bereiten kann, insbesondere wenn aus Bauraumgründen filigrane, mechanische Strukturen zum Einsatz kommen.

Soll neben dem Verriegelungszustand der Gefäßanordnung zusätzlich eine Möglichkeit bereitgestellt werden, den Deckeltyp aus einer Mehrzahl von möglichen unterschiedlichen Deckeltypen zu bestimmen (z.B. bei mehreren unterschiedlichen Deckeln pro Topf), so muss das Erkennungssignal in geeigneter Weise codierbar sein.

Bei einer mechanischen Abtastung des Deckels führt dies zu einem deutlichen Zusatzaufwand. Grund hierfür ist insbesondere, dass zur Übermittlung der Zusatzinformation entweder die Signalanzahl erhöht werden muss (was zusätzliche mechanische Übertragungsmechanismen erfordert) oder eine mechanische Bewegung eines Elementes des mechanischen Mechanismus detaillierter ausgewertet werden muss (z.B. unterschiedliche Stößelhübe je nach Deckeltyp).

Abhängig von der Ausführung bringen mechanische Übertragungselemente auch ein erhöhtes Manipulationsrisiko mit sich. So können die entsprechenden Schalter und/oder Mechaniken von einem Nutzer manuell betätigt werden, um eine Verriegelung vorzutäuschen. Um dies zu verhindern, sind zusätzliche mechanische Strukturen erforderlich. Dies wiederum erschwert die Reinigung noch weiter und erhöht zudem den Implementierungsaufwand.

Bei der zweiten Gruppe wird der Verriegelungszustand des Deckels zwischen der Gefäßanordnung und der Gerätebasis elektrisch übertragen. Anders ausgedrückt, die Wandlung in ein elektrisches Signal erfolgt bereits an der Gefäßanordnung. Aufgrund der Umgebungsbedingungen (z.B. Feuchtigkeit, Schmutz, Temperatur, Spülmaschinenumgebung), denen eine Gefäßanordnung regelmäßig ausgesetzt ist, ist ein Abtasten des Deckels mit Hilfe von Mikroschaltern problematisch. Grund hierfür ist, dass die Mikroschalter eine Abdichtung benötigen. Dies führt zu einem erhöhten Implementierungsaufwand. Zudem handelt es sich bei einer Abdichtung um ein Verschleißelement. Ein Verschleiß kann sich insbesondere negativ auf die Lebensdauer der Gefäßanordnung auswirken.

Die beschriebenen Detektionsmechanismen weisen somit Nachteile in den Bereichen Robustheit, Komplexität und/oder Bauraum auf.

Daher liegt der Anmeldung die Aufgabe zugrunde, eine Möglichkeit zur Detektion eines zweiten Betriebszustands, insbesondere eines Verriegelungszustands, bei einer Gefäßanordnung für ein Küchengerät bereitzustellen, welche robuster und/oder einfacher ausgebildet ist und/oder weniger Bauraum benötigt.

Diese Aufgabe wird gemäß einem ersten Aspekt der Anmeldung gelöst durch eine Gefäßanordnung für ein Küchengerät nach Anspruch 1. Die Gefäßanordnung umfasst ein Speiseaufnahmeelement. Die Gefäßanordnung umfasst mindestens einen Deckel.

Der Deckel ist eingerichtet zum Verschließen einer Öffnung des Speiseaufnahmeelements. Der Deckel ist relativ zu dem Speiseaufnahmeelementzwischen einer ersten Betriebsposition und einer sich von der ersten Betriebsposition unterscheidenden Betriebsposition bewegbar. Der Deckel weist mindestens ein erstes magnetfeldbasiertes Gegenelement auf. Das Speiseaufnahmeelement weist mindestens ein mit einer Detektionseinrichtung verbindbares magnetfeldbasiertes Sensorelement auf. Die Detektionseinrichtung ist eingerichtet zum Detektieren eines zweiten Betriebszustands (bzw. der zweiten Betriebsposition) des Deckels, basierend auf einem ersten Sensordatum. Das magnetfeldbasierte Sensorelement ist eingerichtet zum Ausgeben des ersten Sensordatums nur bei einer Detektion des ersten magnetfeldbasierten Gegenelements in dem Erfassungsbereich des magnetfeldbasierten Sensorelements. Das mindestens eine erste magnetfeldbasierte Gegenelement ist in dem Deckel derart angeordnet, dass das magnetfeldbasierte Gegenelement zumindest dann in dem Erfassungsbereich des magnetfeldbasierten Sensorelements ist, wenn sich der Deckel in der zweiten Betriebsposition befindet.

Im Gegensatz zum Stand der Technik wird anmeldungsgemäß eine Möglichkeit zur Detektion eines zweiten Betriebszustands, insbesondere eines Verriegelungszustands, eines Deckels einer Gefäßanordnung für ein Küchengerät bereitgestellt, welche robuster und einfacher ausgebildet ist und insbesondere weniger Bauraum benötigt, indem in dem Deckel mindesten ein Gegenelement und in dem Speiseaufnahmeelement mindestens ein hierzu korrespondierendes Sensorelement angeordnet ist, wobei das Sensorelement insbesondere nur dann ein erstes Sensordatum ausgibt, wenn sich der Deckel in der zweiten Betriebsposition befindet, insbesondere in der verriegelten Position. Besonders bevorzugt ist das Sensorelement eine Spule und das Gegenelement ein Induktionselement oder das Sensorelement ist ein Magnetfeldsensor und das Gegenelement ein Magnet, wie noch näher ausgeführt wird.

Die anmeldungsgemäße Gefäßanordnung ist für eine Verwendung in einem Küchengerät eingerichtet. Das Küchengerät ist insbesondere eine Küchenmaschine, eingerichtet zum Zubereiten von Speisen und/oder Getränken. Das Zubereiten kann zumindest teilweise automatisiert erfolgen.

Die Gefäßanordnung umfasst mindestens ein Speiseaufnahmeelement und mindestens einen ersten zu dem Speiseaufnahmeelement strukturell korrespondierenden Deckel. Dies meint insbesondere, dass eine (Topf-)Öffnung durch den ersten Deckel verschließbar bzw. abdeckbar ist und der Deckel insbesondere auf die Topföffnung auflegbar ist.

Ein Speiseaufnahmeelement ist insbesondere eingerichtet zum Aufnehmen von Speisen und vorzugsweise ein Topf, auch Kochtopf genannt, eine Pfanne, oder dergleichen. Insbesondere ist unter einem Speiseaufnahmeelement anmeldungsgemäß ein füllbares Gefäß bzw. ein füllbarer Behälter zu verstehen, welches/r zum Zubereiten von Speisen oder Getränken eingerichtet ist, insbesondere zum Garen oder Kochen von Warmspeisen.

Vorzugsweise korrespondiert das Speiseaufnahmeelement (strukturell) zu einer Gerätebasis des Küchengeräts. Das Speiseaufnahmeelement kann beispielswiese zumindest teilweise aus Kunststoff, zumindest teilweise aus Metall und/oder zumindest teilweise aus Glas gebildet sein.

Unter einem Deckel ist anmeldungsgemäß insbesondere ein Verschluss- und/oder Abdeckelement zu verstehen, mit der die Öffnung des Speiseaufnahmeelements zumindest teilweise (z.B. vollständig) verschließbar bzw. abdeckbar ist. Der Deckel kann wiederum eine Deckelöffnung aufweisen, beispielsweise für eine Anordnung, insbesondere Kopplung, eines Zubehörteils.

Der Deckel ist anmeldungsgemäß zumindest zwischen einer ersten Betriebsposition und einer zweiten Betriebsposition bewegbar. Die erste Betriebsposition kann eine Deckelposition sein, in der die Gefäßanordnung nicht betriebsbereit ist, und die zweite Betriebsposition kann eine Deckelposition sein, in der die Gefäßanordnung betriebsbereit ist. In der ersten Betriebsposition ist der Deckel insbesondere nicht betriebsbereit an bzw. auf dem Speiseaufnahmeelement positioniert. Der Deckel bzw. die Gefäßanordnung ist insbesondere in einem ersten Betriebszustand. In der zweiten Betriebsposition ist der Deckel insbesondere betriebsbereit an bzw. auf dem Speiseaufnahmeelement positioniert. Der Deckel bzw. die Gefäßanordnung ist insbesondere in einem zweiten Betriebszustand.

Die erste Betriebsposition kann vorzugsweise eine unverriegelte Betriebsposition und die zweite Betriebsposition eine verriegelte Betriebsposition sein.

Vorzugsweise kann der Deckel mit dem Speiseaufnahmeelement verriegelt werden. Insbesondere ist der erste Deckel relativ zu dem Speiseaufnahmeelement zwischen einer unverriegelten Position und einer (definierten) verriegelten Position bewegbar. In der verriegelten Position befindet sich der Deckel bzw. die Gefäßanordnung in einem Verriegelungszustand. Eine anmeldungsgemäße Verriegelung ist insbesondere eine mechanische Verriegelung bzw. Blockierung des Deckels.

Vorzugsweise kann die Gefäßanordnung mindestens einen (mechanischen) Verriegelungsmechanismus umfassen, eingerichtet zum Verriegeln des ersten Deckels mit dem Speiseaufnahmeelement in einer Verriegelungsposition bzw. verriegelten Position des Deckels. Beispielsweise kann die Verriegelung über mindestens ein an dem Speiseaufnahmeelement angeordnetes Klemmelement (z.B. Walze) (in bekannter Weise) hergestellt werden. Insbesondere kann eine Bajonette-Verriegelung vorgesehen sein. Es versteht sich, dass andere Verriegelungsmechanismen verwendet werden können.

Ein Deckel kann durch einen Deckelantrieb bzw. Verriegelungsaktor automatisch verfahrbar sein oder manuell durch eine Nutzeraktion von der ersten Betriebsposition in die (definierte) zweite Betriebsposition bewegbar sein.

Anmeldungsgemäß ist erkannt worden, dass in einfacher Weise ein zweiter Betriebszustand, insbesondere ein Verriegelungszustand detektierbar ist, wenn in dem Topf ein oder mehrere berührungslos arbeitende Sensorelemente und in dem Deckel ein oder mehrere Gegenelemente derart in dem Speiseaufnahmeelement bzw. dem Deckel angeordnet sind, dass eine Beeinflussung des Sensorelements durch ein Gegenelement zumindest in der zweiten Betriebsposition erfolgt, insbesondere nur in der zweiten Betriebsposition erfolgt, also insbesondere in dem Verriegelungszustand des Deckels. Insbesondere kann das mindestens eine Gegenelement derart in bzw. an dem Deckel angeordnet sein, dass das Gegenelement nur dann in den Erfassungsbereich bzw. Detektionsbereich des in bzw. an dem Speiseaufnahmeelement angeordneten Sensorelements gelangen kann, wenn der Deckel (ordnungsgemäß) an dem Speiseaufnahmeelement ordnungsgemäß positioniert ist und/oder wird (z.B. ordnungsgemäß von der ersten Betriebsposition in die zweite Betriebsposition bewegt wird), insbesondere verriegelt ist und/oder wird.

Magnetfeldbasiert meint vorliegend insbesondere, dass durch ein magnetfeldbasiertes Gegenelement eine detektierbare Beeinflussung des magnetfeldbasierten Sensorelements erfolgt. Vorzugsweise kann durch das magnetfeldbasierte Sensorelement eine Magnetfeldänderung in dem Erfassungsbereich des Sensorelements durch ein zu dem Sensorelement korrespondierendes Gegenelement detektiert werden. Anders ausgedrückt, ein Gegenelement ist insbesondere zum Beeinflussen eines Magnetfelds in dem Erfassungsbereich eines Sensorelements eingerichtet. Ein Sensorelement ist insbesondere eingerichtet zum Detektieren einer Magnetfeldänderung im Erfassungsbereich des Sensors. Eine Magnetfeldänderung in dem Erfassungsbereich umfasst insbesondere, dass ein Magnetfeld in dem Erfassungsbereich detektiert wird (wenn z.B. im unverriegelten Zustand kein Magnetfeld vorhanden ist).

Das magnetfeldbasierte Sensorelement ist eingerichtet zum Ausgeben eines ersten Sensordatums. Vorzugsweise kann ein erstes Sensorsignal ausgegeben werden, das insbesondere das erste Sensordatum enthalten und/oder repräsentieren kann. Das erste Sensordatum wird insbesondere nur dann durch das Sensorelement generiert und ausgesendet, wenn sich das Gegenelement in dem Erfassungsbereich des Sensorelements befindet, also insbesondere eine (bestimmte) Magnetfeldänderung detektiert wird.

Der Erfassungsbereich meint insbesondere einen Bereich um ein Sensorelement herum, in dem ein Gegenelement eine (ausreichende) Änderung eines Magnetfelds bewirkt. Vorzugsweise kann ein Erfassungsbereich eines Sensorelements im Bereich zwischen 0,01 cm und 5 cm liegen, insbesondere zwischen 0,5 cm und 3 cm.

Die Detektionseinrichtung kann vorzugsweise in einer Gerätebasis des Küchengeräts angeordnet sein. Bei anderen Ausführungsformen kann das Speiseaufnahmeelement die Detektionseinrichtung zumindest teilweise umfassen. Die Detektionseinrichtung ist eingerichtet zum Auswerten zumindest des ersten Sensordatums. Insbesondere kann die Detektionseinrichtung bei Erhalt des ersten Sensordatums einen zweiten Betriebszustand, wie einen Verriegelungszustand, detektieren bzw. feststellen.

Vorzugsweise kann abhängig von einem detektierten bzw. festgestellten zweiten Betriebszustand eines Deckels, in dem der Deckel betriebsbereit an dem Speiseaufnahmeelement positioniert ist, beispielsweise ein Verriegelungszustand des Deckels, eine bestimmte Funktion des Küchengeräts für einen Nutzer freigegeben werden. Dies meint insbesondere, dass die Funktion nur bei einem Feststellen des zweiten Betriebszustands freigebbar ist. Bei Detektion eines ersten Betriebszustands, bei der der Deckel nicht betriebsbereit an dem Speiseaufnahmeelement positioniert ist, beispielsweise ein Nicht-Verriegelungszustands, kann die Funktion gesperrt werden bzw. bleiben. Die Sicherheit beim Betrieb des Küchengeräts kann verbessert werden.

Gemäß einer Ausführungsform der anmeldungsgemäßen Gefäßanordnung kann das Speiseaufnahmeelement mindestens zwei an einem oberen Topfrand angeordnete magnetfeldbasierte Sensorelemente aufweisen. Die zwei magnetfeldbasierte Sensorelemente können an im Wesentlichen gegenüberliegenden Seiten des Topfrands angeordnet sein. Der Deckel kann mindestens zwei erste an einem Deckelrand angeordnete magnetfeldbasierte Gegenelemente aufweisen. Die Gegenelemente sind insbesondere auf die Sensorelemente abgestimmt. Die zwei magnetfeldbasierte Gegenelemente können an im Wesentlichen gegenüberliegenden Seiten des Deckelrands angeordnet sein. Indem die Sensorelemente an gegenüberliegenden Seiten angeordnet sind, wird das Risiko einer gegenseitigen Beeinflussung reduziert. Ferner kann der Abstand zwischen einem Gegenelement und einem Sensorelement aufgrund der jeweiligen Positionierung in Randbereichen in der zweiten Betriebsposition minimiert werden. Die Zuverlässigkeit der Positionsdetektion kann weiter verbessert werden.

Vorzugsweise kann das erste magnetfeldbasierte Sensorelement eingerichtet sein zum Ausgeben des ersten Sensordatums nur bei einer Detektion des ersten magnetfeldbasierten Gegenelements in dem Erfassungsbereich des ersten magnetfeldbasierten Sensorelements. Das weitere erste magnetfeldbasierte Sensorelement kann eingerichtet sein zum Ausgeben eines weiteren ersten Sensordatums nur bei einer Detektion des weiteren ersten magnetfeldbasierten Gegenelements in dem Erfassungsbereich des weiteren ersten magnetfeldbasierten Sensorelements.

Die zumindest zwei ersten magnetfeldbasierten Gegenelemente können in dem Deckel derart angeordnet sein, dass das jeweilige erste magnetfeldbasierte Gegenelement nur dann in dem Erfassungsbereich des jeweiligen magnetfeldbasierten Sensorelements ist, wenn sich der Deckel in der zweiten Betriebsposition befindet oder (ordnungsgemäß) in die zweite Betriebsposition bewegt wird.

Die Detektionseinrichtung kann insbesondere eingerichtet sein zum Detektieren des zweiten Betriebszustands, basierend auf dem ersten Sensordatum und dem weiteren ersten Sensordatum. Insbesondere kann durch die Detektionseinrichtung nur dann ein zweiter Betriebszustand, wie ein Verriegelungszustand, detektiert werden, wenn die beiden definierten Signale, also das erste Sensordatum und das weitere Sensordatum, durch die Detektionseinrichtung erhalten werden. Dies erhöht die Zuverlässigkeit der Detektion noch weiter.

Gemäß einer weiteren bevorzugten Ausführungsform der anmeldungsgemäßen Gefäßanordnung kann der Deckel mindestens ein magnetfeldbasiertes Zusatzgegenelement aufweisen. Die Detektionseinrichtung kann eingerichtet sein zum Detektieren des ersten Betriebszustands, wie ein Nicht-Verriegelungszustand, des Deckels, basierend auf einem zweiten Sensordatum. Das magnetfeldbasierte Sensorelement kann eingerichtet sein zum Ausgeben des zweiten Sensordatums nur bei einer Detektion des zweiten magnetfeldbasierten Zusatzgegenelements in dem Erfassungsbereich des magnetfeldbasierten Sensorelements. Das mindestens eine magnetfeldbasierte Zusatzgegenelement kann in dem Deckel derart angeordnet sein, dass das magnetfeldbasierte Zusatzgegenelement nur dann in dem Erfassungsbereich des magnetfeldbasierten Sensorelements ist, wenn sich der Deckel in der ersten Betriebsposition befindet.

Vorteilhafterweise ist nicht nur ein definierter zweiter Betriebszustand, wie ein Verriegelungszustand, sondern zusätzlich auch ein weiterer definierter erster Betriebszustand, wie ein Nicht-Verriegelungszustand, detektierbar. Insbesondere ist das mindestens eine Zusatzgegenelement (kann wie ein Gegenelement gebildet sein) derart in bzw. an dem Deckel angeordnet, dass das Zusatzgegenelement nur dann in den Erfassungsbereich bzw. Detektionsbereich des in bzw. an dem Speiseaufnahmeelement angeordneten Sensorelements gelangen kann, wenn sich der Deckel auf dem Speiseaufnahmeelement in einer definierten ersten Betriebsposition befindet. Von dieser ersten Betriebsposition kann der Deckel (automatisch oder durch den Nutzer) in die zweite Betriebsposition bewegt werden, beispielsweise durch eine Drehbewegung insbesondere bajonettiert werden. In zuverlässiger Weise kann zwischen unterschiedlichen Deckelpositionen, wie unverriegelter Deckelposition und verriegelter Deckelposition, unterschieden werden.

Besonders bevorzugt ist die magnetfeldbasierte Detektion eine induktionsbasierte Detektion. Das induktionsbasierte Detektionsprinzip basiert insbesondere auf einer Erkennung der zweiten Betriebsposition des Deckels durch die Auswertung des Induktivitätswertes einer oder mehrerer elektrischer Spule/n. Die Spulen sind als Sensorelemente am Speiseaufnahmeelement angeordnet und werden insbesondere über elektrische Leitungen und Kontakte mit der Gerätebasis verbunden, wenn das Speiseaufnahmeelement sich auf der Basis befindet. Am Deckel sind Induktionselemente angeordnet, die mit den Spulen interagieren. Insbesondere ist ein Induktionselement eingerichtet zum Beeinflussen der Induktivität einer Spule in definierter Weise. Die Anordnung eines Induktionselements am Deckel ist vorzugsweise so gewählt, dass der Spulenwert nur dann beeinflusst wird, wenn der Deckel die definierte zweite Betriebsposition auf bzw. an dem Speiseaufnahmeelement einnimmt oder (ordnungsgemäß) in die zweite Betriebsposition bewegt wird, also das Induktionselement in dem Erfassungsbereich der Spule ist.

Gemäß einer besonders bevorzugten Ausführungsform der anmeldungsgemäßen Gefäßanordnung kann das mindestens eine magnetfeldbasierte Sensorelement eine Spule sein. Das mindestens eine erste magnetfeldbasierte Gegenelement kann ein aus einem induktivitätsbeeinflussenden Material gebildetes Induktionselement sein. Die Spule kann eingerichtet sein zum Generieren eines Magnetfelds. Das erzeugte Magnetfeld kann im Wesentlichen den Erfassungsbereich bilden. Beispielsweise kann eine Spule mit der Detektionseinrichtung verbunden sein. Die Detektionseinrichtung kann einen Stromgenerator umfassen, eingerichtet zum Bereitstellen eines Stroms. Der Stromfluss durch die Spule kann die Generierung des Magnetfelds bewirken.

Gelangt ein anmeldungsgemäßes Induktionselement in das Magnetfeld der Spule, wird dies durch die Spule detektiert. Das genannte erste Sensordatum wird insbesondere ausgegeben. Insbesondere bewirkt ein im Erfassungsbereich befindliches Induktionselement eine Stromänderung bzw. eine Änderung der Induktivität der Spule. Die Detektionseinrichtung kann insbesondere die Induktivität bestimmen. Die durch das Induktionselement erzeugte Induktivität stellt insbesondere das erste Sensordatum dar.

Wenn ein Gegenelement und ein Zusatzgegenelement in Form eines Induktionselements und eines (sich von dem Induktionselement unterscheidenden) Zusatzinduktionselements in dem Deckel angeordnet sind, kann das erste Sensordatum eine Induktivität und das zweite Sensordatum eine Zusatzinduktivität sein. Der Wert der Induktivität und der Wert der Zusatzinduktivität können sich voneinander unterscheiden.

Gemäß einer bevorzugten Ausführungsform der anmeldungsgemäßen Gefäßanordnung kann das induktivitätsbeeinflussende Material ein Metall sein. Besonders bevorzugt kann das Metall ausgewählt sein aus der Gruppe, umfassend weichmagnetisches Metall (z.B. Eisen) und nicht-magnetisches Metall (z.B. Aluminium). Es versteht sich, dass bei anderen Varianten der Anmeldung auch andere elektrisch leitfähige Materialien verwendet werden können. Beispielsweise können ein erstes Induktivitätselement aus einem ersten Metall und eine weiteres Induktivitätselement aus einem weiteren Metall hergestellt sein. Hieraus resultieren unterschiedliche Induktivitätswerte.

Darüber hinaus kann ein Induktionselement ein Flachelement bzw. ein plattenförmiges Element sein. Insbesondere kann das Flachelement eine Metallplatte sein.

Grundsätzlich kann das Flachelement eine beliebige Form haben, insbesondere Umriss bzw. Kontur. Das Flachelement kann beispielweise rechteckförmig sein. Die Form des Flachelements kann sich insbesondere an der Deckelrandform orientieren und daran angepasst sein, beispielsweise entsprechend gebogen sein.

Vorzugsweise kann das Flachelement eine Oberfläche mit einer Größe zwischen 0,25 cm² und 25 cm² aufweisen, vorzugsweise zwischen 0,5 cm² und 8 cm².

Gemäß einer weiteren bevorzugten Ausführungsform der anmeldungsgemäßen Gefäßanordnung kann die Gefäßanordnung zumindest einen ersten Deckel und einen zweiten sich von dem ersten Deckel unterscheidenden Deckel umfassen. Anders ausgedrückt, kann der erste Deckel ein erster Deckeltyp und der zweite Deckel ein zweiter Deckeltyp sein. Insbesondere kann der erste Deckel für eine erste Küchengerätfunktion, der zweite Deckel für eine zweite Küchengerätfunktion eingerichtet sein, wobei sich insbesondere die erste Küchengerätfunktion von der zweiten Küchengerätfunktion unterscheiden kann. Beispielhafte Küchengerätefunktionen sind eine erste Schneidfunktion mit einer ersten maximal zulässigen Drehzahl und/oder Drehmoment, eine weitere Schneidfunktion mit einer zweiten (sich von der ersten maximal zulässigen Drehzahl und/oder Drehmoment unterscheidenden) maximal zulässigen Drehzahl und/oder Drehmoment, eine erste Rührfunkton mit einer ersten maximal zulässigen Drehzahl und/oder Drehmoment, eine weitere Rührfunkton mit einer zweiten (sich von der ersten maximal zulässigen Drehzahl und/oder Drehmoment unterscheidenden) maximal zulässigen Drehzahl und/oder Drehmoment, eine erste Motordrehrichtung, eine zweite entgegengesetzte Motordrehrichtung, eine erste Solltemperatur und/oder ein erster Solltemperaturbereich einer in dem Speiseaufnahmeelement integrierten Heizung, eine zweite (sich von der ersten Solltemperatur unterscheidenden) Solltemperatur und/oder ein zweiter (sich von dem ersten Solltemperaturbereich unterscheidenden) Solltemperaturbereich einer in dem Speiseaufnahmeelement integrierten Heizung, Steuerprogramme und/oder Steuerprogrammsollparameter für bestimmte Operationen etc.

Das mindestens eine erste Induktionselement des ersten Deckels und das mindestens eine zweite Induktionselement des zweiten Deckels können sich voneinander unterscheiden. Dies ermöglicht nicht nur die Detektion eines Verriegelungszustands des jeweiligen Deckels, sondern zusätzlich eine Identifizierung des an dem Speiseaufnahmeelement in der zweiten Betriebsposition angeordneten Deckels bzw. Deckeltyps.

Insbesondere kann das mindestens eine erste Induktionselement aus einem ersten induktivitätsbeeinflussenden Material hergestellt sein und das mindestens eine zweite Induktionselement aus einem zweiten sich von dem ersten induktivitätsbeeinflussenden Material unterscheidenden induktivitätsbeeinflussenden Material hergestellt sein. Wie bereits beschrieben wurde, können unterschiedliche Materialien das Magnetfeld in unterschiedlicher Weise beeinflussen. Hieraus resultiert insbesondere eine unterschiedliche Induktivität der Spule, die durch die Detektionseinrichtung erfasst und insbesondere für eine Identifikation ausgewertet werden kann. In einfacher Weise kann ein Deckeltyp identifiziert werden.

Alternativ oder zusätzlich kann/können sich die Form und/oder Dimension des ersten Induktionselements von der Form und/oder Dimension des zweiten Induktionselements unterscheiden. Induktionselemente mit unterschiedlichen Formen und/oder Dimensionen können ein Magnetfeld in unterschiedlicher Weise beeinflussen. Hieraus resultiert insbesondere eine unterschiedliche Induktivität der Spule, die durch die Detektionseinrichtung erfasst und insbesondere für eine Identifikation ausgewertet werden kann. In einfacher Weise kann ein Deckeltyp identifiziert werden.

Ferner kann sich alternativ und/oder zusätzlich zum Material, Form und/oder Dimension die Anordnungsposition des ersten Induktionselements in dem ersten Deckel von der Anordnungsposition des zweiten Induktionselements in dem zweiten Deckel jeweils in Bezug zu der zweiten Betriebsposition unterscheiden. Insbesondere kann der während der Bewegung von der ersten Betriebsposition in die zweite Betriebsposition detektierbare Induktionsverlauf der Spule durch unterschiedliche Anordnungspositionen beeinflusst werden. Hieraus resultieren insbesondere unterschiedliche Induktivitätsverläufe für unterschiedliche Deckel, die durch die Detektionseinrichtung erfasst und insbesondere für eine Identifikation ausgewertet werden können. In einfacher Weise kann ein Deckeltyp identifiziert werden.

Gemäß einer weiteren bevorzugten Ausführungsform der anmeldungsgemäßen Gefäßanordnung kann der erste Deckel eine Mehrzahl von ersten Induktionselementen aufweisen. Der zweite Deckel kann eine Mehrzahl von zweiten Induktionselementen aufweisen. Die Mehrzahl der ersten Induktionselemente kann aus einer ersten Materialkombination hergestellt sein. Die Mehrzahl der zweiten Induktionselemente kann aus einer zweiten sich von der ersten Materialkombination unterscheidenden Materialkombination hergestellt sein. Jeder Deckeltyp (einer anmeldungsgemäßen Gefäßanordnung) kann mit einer (systemweit einmaligen) Materialkombination codiert sein. Dies erlaubt es die Anzahl an identifizierbaren Deckeltypen in einfacher Weise zu erhöhen. Beispielsweise kann bei einer bevorzugten Ausführungsform mit jeweils zwei gegenüberliegenden Induktionselementen (Induktionselement 1 und Induktionselement 2) eine zuverlässige Unterscheidung von vier Deckeltypen erreicht werden, wenn die vier Deckel entsprechend der nachfolgenden Tabelle 1 codiert werden:

**Tabelle 1**

| | Induktionselement 1 | Induktionselement 2 |
|---|---|---|
| Deckeltyp 1 | Material 1 | Material 2 |
| Deckeltyp 2 | Material 2 | Material 1 |
| Deckeltyp 3 | Material 1 | Material 1 |
| Deckeltyp 4 | Material 2 | Material 2 |

Hierbei kann vorzugsweise das erste Material ein weichmagnetisiertes Metall (insbesondere Eisen) und das zweite Material ein nicht-magnetisches Metall (insbesondere Aluminium) sein.

Gemäß einer weiteren Ausführungsform der anmeldungsgemäßen Gefäßanordnung kann die Spule einen Spulenkern in Form eines U-förmigen Jochs und mindestens eine um den Spulenkern gewickelte Spulenwicklung aufweisen. Das Speiseaufnahmeelement kann eine Spulenabdeckung aufweisen. Nur die Enden des U-förmigen Jochs können durch eine jeweilige Öffnung in der Spulenabdeckung ragen. Das Joch kann vorzugsweise aus einem weichmagnetischen Metall hergestellt sein. Beispielsweise kann das U-förmige Joch ein gebogenes Blech sein. Die Abdeckung kann insbesondere eine Kunststoffblende sein. Dies erlaubt eine unauffällige Integration in das Speiseaufnahmeelement.

Die Spule kann insbesondere derart in dem Speiseaufnahmeelement angeordnet sein, dass die Enden des U-förmigen Jochs von der (vertikalen) Topfachse radial nach außen weisen und insbesondere in einer zweiten Betriebsposition des Deckels dem Induktionselement unmittelbar gegenüber liegen.

Die Enden des Jochs können vorzugsweise durch Aussparungen in der Spulenabdeckung hindurchragen. Dies ermöglicht es, einen möglichst geringen Abstand zu dem zugehörigen Induktionselement in der zweiten Betriebsposition des Deckels bereitzustellen. Dies wirkt sich insbesondere positiv auf die Signalstärke auf. So kann ein möglichst kleiner Spalt zwischen Induktionselement (z.B. Metallplatte) und Spulenjoch bereitgestellt werden. Die Zuverlässigkeit bei der Detektion und/oder Identifikation kann weiter verbessert werden.

Gemäß einer Ausführungsform der anmeldungsgemäßen Gefäßanordnung kann das Speiseaufnahmeelement mindestens zwei (vorzugsweise an gegenüberliegenden Topfrandseiten angeordnete) Spulen aufweisen. Das Speiseaufnahmeelement kann zwischen einem ersten Spulenkontakt der ersten Spule und einem ersten unteren Topfkontakt eine erste elektrische Topfverbindung aufweisen. Das Speiseaufnahmeelement kann zwischen einem ersten Spulenkontakt der zweiten Spule und einem zweiten unteren Topfkontakt eine zweite elektrische Topfverbindung aufweisen. Das Speiseaufnahmeelement kann zwischen einem zweiten Spulenkontakt der ersten Spule und einem dritten unteren Topfkontakt eine dritte elektrische Topfverbindung aufweisen. Das Speiseaufnahmeelement kann zwischen einem zweiten Spulenkontakt der ersten Spule und einem vierten unteren Topfkontakt eine vierte elektrische Topfverbindung aufweisen. Die unteren Topfkontakte können eingerichtet sein zum elektrischen Verbinden mit einer Detektionseinrichtung.

Eine entsprechende Ausführung ermöglicht in sicherer Weise eine Übertragung der jeweiligen Sensorsignale, enthaltend zumindest das erste Sensordatum (z.B. in Form einer bestimmten elektrischen Größe (z.B. Strom, Spannung und/oder Induktivität), an die Detektionseinrichtung.

Gemäß einer bevorzugten Ausführungsform der anmeldungsgemäßen Gefäßanordnung kann das Speiseaufnahmeelement mindestens zwei Spulen aufweisen. Das Speiseaufnahmeelement kann zwischen einem ersten Spulenkontakt der ersten Spule und einem ersten unteren Topfkontakt eine erste elektrische Topfverbindung aufweisen. Das Speiseaufnahmeelement kann zwischen einem ersten Spulenkontakt der zweiten Spule und einem zweiten unteren Topfkontakt eine zweite elektrische Topfverbindung aufweisen. Das Speiseaufnahmeelement kann zwischen einem zweiten Spulenkontakt der ersten Spule und einem dritten unteren Topfkontakt eine dritte elektrische Topfverbindung aufweisen. Das Speiseaufnahmeelement kann zwischen einem zweiten Spulenkontakt der ersten Spule und dem dritten unteren Topfkontakt eine vierte elektrische Topfverbindung aufweisen. Die drei unteren Topfkontakte können eingerichtet sein zum elektrischen Verbinden mit der Detektionseinrichtung.

In aufwandsarmer Weise kann eine elektrische Verbindung zwischen den zumindest zwei Spulen und der Detektionseinrichtung bereitgestellt werden. Insbesondere verfügen die Spulen in der vorliegenden Ausführungsform über einen gemeinsamen (dritten) Topfkontakt. Die Topfkontakte können mit hierzu korrespondierenden Basiskontakten der Gerätebasis verbindbar sein. So kann der dritte, gemeinsame Topfkontakt zu einem dritten Basiskontakt und die anderen beiden Spulenkontakte über die jeweiligen Topfkontakte jeweils getrennt voneinander zur Gerätebasis (über entsprechende Basiskontakte) geführt sein. Dies hat den Vorteil, dass durch eine entsprechende Messschaltung bzw. Messmodul in der Detektionseinrichtung die zumindest zwei Spulen einzeln auswertbar sind, so dass Induktivitätsänderungen eindeutig den einzelnen Spulen zugeordnet werden können und gleichzeitig die notwendige Kontaktanzahl reduziert werden kann.

Gemäß einer weiteren bevorzugten Ausführungsform der Gefäßanordnung kann das Speiseaufnahmeelement mindestens zwei Spulen aufweisen. Das Speiseaufnahmeelement kann zwischen einem ersten Spulenkontakt der ersten Spule und einem ersten unteren Topfkontakt eine erste elektrische Topfverbindung aufweisen. Das Speiseaufnahmeelement kann zwischen einem zweiten Spulenkontakt der zweiten Spule und einem zweiten unteren Topfkontakt eine zweite elektrische Topfverbindung aufweisen. Das Speiseaufnahmeelement kann zwischen einem zweiten Spulenkontakt der ersten Spule und einem ersten Spulenkontakt der ersten Spule eine fünfte elektrische Topfverbindung aufweisen. Die zwei unteren Topfkontakte können eingerichtet sein zum elektrischen Verbinden mit der Detektionseinrichtung. Mit anderen Worten, die zumindest zwei Spulen können in Reihe geschaltet sein. Hierdurch können die Kontaktanzahl und die notwendigen elektrischen Verbindungen noch weiter reduziert werden.

Die Reihenschaltung der Spulen bietet insbesondere die Möglichkeit, mit nur zwei Kontakten zur Gerätebasis auszukommen. Wenn die zwei Induktionselemente so in dem Deckel angeordnet sind, dass insbesondere beim Verschließen des Deckels, also bei einem Bewegen des Deckels von einer ersten Betriebsposition in die zweite Betriebsposition, zunächst (nur) das erste Induktionselement und dann zusätzlich auch das weitere Induktionselement die jeweilige Spule beeinflusst, dann steigt die Induktivität der Reihenschaltung in zwei Stufen an. Durch Auswerten des zeitlichen Verlaufs der Gesamtinduktivität (Summeninduktivität) kann dann geprüft werden, ob der Deckel beidseitig in der korrekten (zweiten) Betriebsposition ist.

Insbesondere können sich die zumindest zwei unteren Topfkontakte an dem Topfboden befinden. Die zumindest zwei unteren Topfkontakte können zu zumindest zwei in der Gerätebasis angeordneten Basiskontakte korrespondieren. Von dem jeweiligen Basiskontakt kann jeweils eine elektrische Basisverbindung zu der in der Gerätebasis angeordneten Detektionseinrichtung verlaufen. Vorzugsweise kann eine Gerätesteuerung die Detektionseinrichtung umfassen.

Die Gerätebasis kann eine Topfaufnahme umfassen. Eine elektrische Verbindung zwischen einem jeweiligen unteren Topfkontakt und einem hierzu korrespondierenden Basiskontakt kann insbesondere (nur) dann hergestellt werden, wenn das Speiseaufnahmeelement in der Topfaufnahme (ordnungsgemäß) angeordnet ist. Die Topfaufnahme ist eingerichtet zum Aufnehmen des Speiseaufnahmeelements, insbesondere zumindest des Bodens des Speiseaufnahmeelements. Die Topfaufnahme kann derart zu dem Speiseaufnahmeelement der Gefäßanordnung korrespondieren, dass eine elektrische Verbindung zwischen dem jeweiligen unteren Topfkontakt und einem hierzu korrespondierenden Basiskontakt nur dann hergestellt wird, wenn das Speiseaufnahmeelement in der Topfaufnahme (korrekt) angeordnet ist.

Wie bereits beschrieben wurde, kann bei weiteren Varianten der Anmeldung das Speiseaufnahmeelement die Detektionseinrichtung zumindest teilweise umfassen. In diesem Fall können die zumindest zwei unteren Topfkontakte auch an einer anderen Stelle angeordnet sein und insbesondere mit der Detektionseinrichtung (unmittelbar) verbunden sein.

Gemäß einer weiteren bevorzugten Ausführungsform der anmeldungsgemäßen Gefäßanordnung kann das mindestens eine magnetfeldbasierte Sensorelement ein Magnetfeldsensor sein. Das mindestens eine magnetfeldbasierte Gegenelement kann ein Magnet sein. Vorzugsweise kann der mindestens eine Magnetfeldsensor ausgewählt sein aus der Gruppe, umfassend Hall-Sensor und Reedschalter. Gelangt ein Magnet in den Erfassungsbereich des Magnetfeldsensors, kann das durch den Magneten generierte Magnetfeld durch den Magnetfeldsensor detektiert werden. Es wird also insbesondere eine Magnetfeldänderung detektiert. Ein entsprechendes erstes Sensordatum kann durch den Magnetfeldsensor ausgegeben und insbesondere an die Detektionseinrichtung übertragen werden, beispielsweise über eine drahtgebundene Verbindung. In einfacher und zuverlässiger Weise kann ein Verriegelungszustand detektiert werden.

Diese Ausführungsform kann insbesondere als Alternative zu dem induktionsbasierten Konzept verwendet werden. Bei Varianten der Anmeldung ist jedoch auch eine Kombination der Konzepte möglich.

Gemäß einer bevorzugten Ausführungsform der anmeldungsgemäßen Gefäßanordnung kann die Gefäßanordnung zumindest einen ersten Deckel und einen zweiten sich von dem ersten Deckel unterscheidenden Deckel umfassen. Der mindestens eine erste Magnet des ersten Deckels kann in dem ersten Deckel angeordnet sein, derart, dass der Magnetfeldsensor in der zweiten Betriebsposition des ersten Deckels ein erstes Magnetfeld mit einer ersten Magnetfeldrichtung detektiert. Insbesondere kann die Ausrichtung des Nordpols und Südpols des ersten Magneten gemäß einer ersten Ausrichtung definiert sein. Der mindestens eine zweite Magnet des zweiten Deckels kann an dem zweiten Deckel angeordnet sein, derart, dass der Magnetfeldsensor in der zweiten Betriebsposition des zweiten Deckels ein zweites Magnetfeld mit einer zweiten sich von der ersten Magnetfeldrichtung unterscheidenden Magnetfeldrichtung detektiert. Insbesondere kann die Ausrichtung des Nordpols und Südpols des zweiten Magneten gemäß einer zweiten zu der ersten Ausrichtung gegenteiligen Ausrichtung definiert sein. Aus den unterschiedlichen Magnetfeldrichtungen resultieren insbesondere unterschiedliche Sensorsignale bzw. Sensorsignalinhalte. In sicherer Weise können zumindest zwei Deckeltypen identifiziert werden.

Darüber hinaus kann der erste Deckel eine Mehrzahl von ersten Magneten aufweisen. Der zweite Deckel kann eine Mehrzahl von zweiten Magneten aufweisen. Die Mehrzahl der ersten Magnete kann in einer ersten Polpositionskombination in dem ersten Deckel angeordnet sein. Die Mehrzahl der zweiten Induktionselemente kann in einer zweiten sich von der ersten Polpositionskombination unterscheidenden Polpositionskombination in dem zweiten Deckel angeordnet sein. Dies erlaubt es die Anzahl an identifizierbaren Deckeltypen in einfacher Weise zu erhöhen. Jeder Deckeltyp (einer anmeldungsgemäßen Gefäßanordnung) kann mit einer (systemweit einmaligen) Polpositionskombination codiert sein. Beispielsweise kann bei einer bevorzugten Ausführungsform mit jeweils zwei gegenüberliegenden Magneten (Magnet 1 und Magnet 2 bzw. linker Magnet und rechter Magnet) eine zuverlässige Unterscheidung von vier Deckeltypen erreicht werden, wenn die vier Deckel gemäß der nachfolgenden Tabelle 2 codiert werden:

**Tabelle 2**

| | Magnet 1 (Ausrichtung der Pole) | Magnet 2 (Ausrichtung der Pole) |
|---|---|---|
| Deckeltyp 1 | NP-SP | NP-SP |
| Deckeltyp 2 | NP-SP | SP-NP |
| Deckeltyp 3 | SP-NP | NP-SP |
| Deckeltyp 4 | SP-NP | SP-NP |

Hierbei steht NP für Nordpol und SP für Südpol.

Ein weiterer Aspekt der Anmeldung ist ein Küchengerät. Das Küchengerät umfasst eine zuvor beschriebene Gefäßanordnung. Das Küchengerät umfasst eine Gerätebasis, umfassend eine mit dem mindestens einen magnetfeldbasierten Sensorelement des Topfs der Gefäßanordnung verbindbare Detektionseinrichtung. Die Detektionseinrichtung ist eingerichtet zum Detektieren eines zweiten Betriebszustands des Deckels (bzw. der zweiten Betriebsposition) der Gefäßanordnung, basierend zumindest auf einem ausgegebenen ersten Sensordatum (und insbesondere einem Positionskriterium, wie einem Verriegelungskriterium).

Vorzugsweise kann das Küchengerät eine zu dem Speiseaufnahmeelement der Gefäßanordnung korrespondierende Topfaufnahme aufweisen. Die Topfaufnahme ist eingerichtet zum Aufnehmen des Speiseaufnahmeelements, insbesondere zumindest des Bodens des Speiseaufnahmeelements. Die Topfaufnahme kann derart zu dem Speiseaufnahmeelement der Gefäßanordnung korrespondieren, dass eine elektrische Verbindung zwischen dem jeweiligen unteren Topfkontakt und einem hierzu korrespondierenden elektrischen Basiskontakt der Gerätebasis nur dann hergestellt werden, wenn das Speiseaufnahmeelement in der Topfaufnahme (korrekt) angeordnet ist.

Wie bereits beschrieben wurde, kann die Detektionseinrichtung eingerichtet sein zum Detektieren eines zweiten Betriebszustands des Deckels (bzw. der zweiten Betriebsposition), insbesondere eines Verriegelungszustands des Deckels bzw. der Gefäßanordnung, basierend auf einem erhaltenen ersten Sensordatum. Insbesondere zeigt das mindestens eine (zuvor beschriebene) erste Sensordatum an, dass der Deckel (korrekt) in die zweite Betriebsposition bewegt wurde.

Insbesondere für den Fall, dass das erhaltene erste Sensordatum ein (vordefiniertes) Positionskriterium (beispielsweise ein bestimmter Größenbereich, wie ein Spannungs-, Strom-, und/oder Induktionsbereich und/oder eine bestimmte Mindestmagnetfeldstärke und/oder eine bestimmte Magnetfeldrichtung) erfüllt, kann bestimmt bzw. detektiert werden, dass der Deckel (ordnungsgemäß) an dem Speiseaufnahmeelement positioniert ist, vorzugsweise verriegelt ist, also ein Verriegelungszustand der Gefäßanordnung vorliegt. Wie beschrieben wurde, kann insbesondere ein vorbeschriebener Induktionswert durch die Detektionseinrichtung als erstes Sensordatum bestimmt werden. Wenn der Induktionswert das Positionskriterium erfüllt, wird insbesondere der zweite Betriebszustand detektiert. Wenn der Induktionswert das Positionskriterium nicht erfüllt, wird insbesondere der erste (sich von dem zweiten Betriebszustand unterscheidende) Betriebszustand, wie ein Nicht-Verriegelungszustand, detektiert.

Alternativ oder zusätzlich kann insbesondere ein Magnetfeldstärkewert bestimmt werden. Wenn der Magnetfeldstärkewert das Positionskriterium (beispielsweise ein Mindest-Magnetfeldstärkewert) erfüllt, wird insbesondere der zweite Betriebszustand detektiert. Wenn der Magnetfeldstärkewert das Positionskriterium nicht erfüllt, wird insbesondere der erste Betriebszustand detektiert.

Gemäß einer Ausführungsform des anmeldungsgemäßen Küchengeräts kann eine Mehrzahl von Deckeltypkriterien vordefiniert sein und jedem der Deckeltypkriterien ein (unterschiedlicher) Deckeltyp zugeordnet sein. Die Detektionseinrichtung kann eingerichtet sein zum Identifizieren des Deckeltyps, basierend auf mindestens einem von dem mindestens einen magnetfeldbasierten Sensorelement erhaltenen Sensorsignal und den Deckeltypkriterien.

Das Sensorsignal kann zumindest das erste Sensordatum enthalten. Insbesondere kann geprüft werden, ob das erste Sensordatum (z.B. eine gemessene Induktivität, eine gemessene Magnetfeldrichtung bzw. eine entsprechende elektrische Größe etc.) das Deckeltypkriterium (beispielsweise ein vordefinierter Größenbereich, insbesondere Induktivitätsbereich, oder eine vordefinierte Magnetfeldrichtung) erfüllt oder nicht. Die Detektionseinrichtung kann insbesondere eingerichtet sein zum Identifizieren des Deckeltyps, basierend auf einem Vergleich z.B. einer gemessenen Induktivität, einer gemessenen Magnetfeldrichtung etc. und der Mehrzahl von Deckeltypkriterien. Beispielsweise kann das Deckeltypkriterium ein vordefinierter Induktionsbereich für einen bestimmten Deckeltyp sein. Liegt der bestimmte Induktionswert des in der zweiten Betriebsposition befindlichen Deckels in dem Induktionsbereich eines bestimmten Deckeltyps, kann als Deckeltyp der bestimmte Deckeltyp identifiziert werden.

Jedem Deckeltyp kann insbesondere in eindeutiger Weise jeweils ein Deckeltypkriterium zugeordnet sein. In eindeutiger Weise können unterschiedliche Deckeltypen identifiziert werden. Die Deckeltypkriterien können beispielsweise auf der Tabelle 1 oder 2 basieren.

Insbesondere kann bei dieser Ausführungsform das Positionskriterium auch durch das Deckeltypkriterium gebildet sein.

Gemäß einer weiteren Ausführungsform des anmeldungsgemäßen Küchengeräts kann das Küchengerät mindestens eine (optische) Anzeige umfassen, eingerichtet zum Anzeigen des identifizierten Deckeltyps. Hierdurch kann dem Nutzer eine Rückmeldung gegeben werden. Sollte der falsche Deckeltyp aufgrund einer Verschmutzung erkannt worden sein, kann beispielsweise eine Reinigung des Randbereichs des Topfs bzw. des Deckels durch den Nutzer veranlasst werden.

Vorzugsweise erfolgt die Freischaltung einer bestimmten Gerätefunktion des Küchengeräts in Abhängigkeit des identifizierten Deckeltyps. Beispielsweise kann jedem Deckeltyp und/oder jedem Deckeltypkriterium die mindestens eine freigebbare Gerätefunktion zugeordnet sein. Diese Angaben können in der Gerätesteuerung gespeichert sein.

Das anmeldungsgemäße Küchengerät kann vorzugsweise einen Werkzeugantrieb umfassen, eingerichtet zum Antreiben von mindestens einem Küchengerätewerkzeug. Der Werkzeugantrieb kann insbesondere in der Gerätebasis integriert sein. Der Werkzeugantrieb ist insbesondere von einer Gerätesteuerung des Küchengeräts ansteuerbar. Vorzugsweise kann das mindestens eine Küchengerätewerkzeug mit dem Antrieb lösbar koppelbar sein. Das Küchengerätewerkzeug kann insbesondere in der Gefäßanordnung angeordnet werden. Beispielsweise kann das Küchengerätewerkzeug ein Schneidwerkzeug (z.B. Messer) und/oder ein Rührwerkzeug und/oder ein Spatel und/oder Umwälzelement und/oder Abdeckelement sein.

Gemäß einer bevorzugten Ausführungsform des anmeldungsgemäßen Küchengeräts kann das Küchengerät einen (grundsätzlich) zwischen einem minimalen Antriebsparameterwert (z.B. 0) und einem maximalen Antriebsparameterwert betreibbaren Werkzeugantrieb umfassen, eingerichtet zum Betreiben bzw. Antreiben mindestens eines Küchengerätewerkzeugs. Insbesondere kann ein Antriebsparametersollwert durch eine Gerätesteuerung vorgegeben werden. Die Gerätesteuerung kann eingerichtet sein zum Ansteuern des Werkzeugantriebs mit dem Antriebsparametersollwert. Dann kann der Werkzeugantrieb entsprechend dem Antriebsollparameterwert das Küchengerätewerkzeug antreiben. Die Antriebssollparameter können eine Drehzahl, eine Drehrichtung und /oder ein Drehmoment umfassen.

Das Küchengerät (insbesondere die Gerätesteuerung des Küchengeräts) kann mindestens ein Beschränkungsmodul umfassen. Das Beschränkungsmodul kann eingerichtet sein zum Beschränken bzw. Reduzieren zumindest eines maximal zulässigen Antriebssollparameterwerts, basierend auf dem identifizierten Deckeltyp und einem für den Deckeltyp (vordefinierten) Antriebskriterium. Der maximal zulässige Antriebssollparameterwert kann kleiner sein als der maximale Antriebsparameterwert des Werkzeugantriebs.

Dies meint insbesondere, dass abhängig von dem identifizierten Deckeltyp ein Antreiben des Küchengerätewerkzeugs nicht mit dem maximal möglichen Antriebsparameterwert des Werkzeugantriebs zugelassen bzw. möglich ist, sondern nur mit einem geringen Antriebsparametersollwert, der von dem Beschränkungsmodul gesetzt wird.

Hierbei wird insbesondere der durch z.B. die Gerätesteuervorrichtung vorgebbare Antriebssollparameterwert auf einen maximal zulässigen Antriebssollparameterwert beschränkt, der kleiner ist als der grundsätzlich mögliche Antriebssollparameterwert. Dies meint, dass die Gerätesteuerung als Antriebssollparameterwert maximal den maximal zulässigen Antriebssollparameterwert vorgeben kann und damit insbesondere den Werkzeugantrieb ansteuern kann.

Das Antriebskriterium kann vordefiniert sein und insbesondere zumindest den maximal zulässigen Antriebssollparameterwert definieren. Auch kann ein zulässiger Antriebssollparameterwertebereich definiert sein. Jedem Deckeltyp und/oder Deckeltypkriterium kann vorzugsweise ein Antriebskriterium zugeordnet sein. In einem Datenspeicher des Küchengeräts können diese Daten gespeichert sein, beispielsweise in Form einer Zuordnungstabelle.

Indem der einstellbare Antriebsparameterwert abhängig vom Deckeltyp begrenzt wird, können unzulässige Betriebszustände des Küchengeräts verhindert werden. So wird zuverlässig verhindert, dass der Werkzeugantrieb bei einem bestimmten Deckeltyp mit einem für diesen Deckeltyp nicht zulässigen Antriebsparameterwert betrieben wird.

Vorzugsweise kann der mindestens eine Antriebsparameter eine Drehzahl und/oder ein Drehmoment und/oder Drehrichtung sein. Insbesondere können in Abhängigkeit von dem identifizierten Deckeltyp verschiedene Drehzahl- und/oder Drehmomentbereiche eines Werkezugantriebs z.B. in Form eines Mixmesser-Antriebs freigegeben werden. Alternativ könnte auch die Heizleistung wie auch der Temperaturbereich der Heizung freigegeben bzw. eingeschränkt werden.

Gemäß einer weiteren bevorzugten Ausführungsform kann die Detektionseinrichtung eingerichtet sein zum Bestimmen mindestens eines Induktivitätswerts aus mindestens einem von einer Spule erhaltenen Sensorsignal. Wie beschrieben wurde, kann dieser Induktionswert mit den Deckeltypkriterien (wie unterschiedliche vordefinierte Induktionswertebereiche) verglichen werden. In einfacher und zuverlässiger Weise kann durch die Detektionseinrichtung der Deckeltyp bestimmt werden.

Alternativ oder zusätzlich kann die Detektionseinrichtung eingerichtet sein zum Bestimmen mindestens eines Induktivitätswerteverlaufs aus mindestens einem von einer Spule erhaltenen Sensorsignal (während eines Bewegungsvorgangs des Deckels von der ersten Betriebsposition in die zweite Betriebsposition). Wie beschrieben wurde, kann dieser (zeitliche) Induktionswerteverlauf mit den Deckeltypkriterien (wie unterschiedliche vordefinierte Induktionswerteverläufe) verglichen werden. In einfacher und zuverlässiger Weise kann durch die Detektionseinrichtung der Deckeltyp bestimmt werden.

Alternativ oder zusätzlich kann die Detektionseinrichtung eingerichtet sein zum Bestimmen mindestens eines Signalmusters (das insbesondere eine oder mehrere Magnetfeldrichtungen bzw. Polpositionskombinationen repräsentiert) aus mindestens einem von einem Magnetfeldsensor erhaltenen Sensorsignal. Wie beschrieben wurde, kann dieses Signalmuster mit den Deckeltypkriterien (wie unterschiedliche vordefinierte Signalmuster bzw. Polpositionskombination (vgl. Tabelle 2)) verglichen werden. In einfacher Weise kann durch die Detektionseinrichtung der Deckeltyp bestimmt werden.

Alternativ oder zusätzlich kann die Detektionseinrichtung eingerichtet sein zum Bestimmen mindestens eines Signalmusterverlaufs aus mindestens einem von einem Magnetfeldsensor erhaltenen Sensorsignal (während eines Bewegungsvorgangs des Deckels von der ersten Betriebsposition in die zweite Betriebsposition). Wie beschrieben wurde, kann dieser (zeitliche) Signalmusterverlauf mit den Deckeltypkriterien (wie unterschiedliche vordefinierte Signalmusterverläufe) verglichen werden. In einfacher und zuverlässiger Weise kann durch die Detektionseinrichtung der Deckeltyp bestimmt werden.

Wie bereits beschrieben wurde, kann der Deckel manuell zwischen einer ersten Betriebsposition und einer zweiten Betriebsposition bewegt werden oder durch einen Deckelantrieb automatisch verfahren werden. Gemäß einer weiteren Ausführungsform des anmeldungsgemäßen Küchengeräts kann das Küchengerät (insbesondere die Gerätebasis) einen Deckelantrieb umfassen. Der Deckelantrieb kann eingerichtet sein zum Verfahren eines Deckels zumindest zwischen der ersten Betriebsposition und der zweiten Betriebsposition.

Die Detektionseinrichtung kann eingerichtet sein zum Erfassen von mindestens einem Deckelantriebsparameterwert. Die Detektionseinrichtung kann eingerichtet sein zum Detektieren des Verriegelungszustands der Gefäßanordnung, (zusätzlich) basierend auf dem erfassten Deckelantriebsparameterwert (und insbesondere einem Deckelantriebskriterium). Insbesondere kann zusätzlich ein Deckelantriebsparameterwert erfasst und ausgewertet werden. Der Verriegelungszustand der Gefäßanordnung kann basierend auf der erfassten elektrischen Größe und des Deckelantriebsparameterwerts bestimmt werden. Vorzugsweise wird nur dann ein in der zweiten Betriebsposition angeordneter Deckel (bzw. ein entsprechender Zustand) detektiert, wenn sowohl die erfasste elektrische Größe das Positionskriterium als auch der erfasste Deckelantriebsparameterwert das (vordefinierte) Deckelantriebskriterium erfüllen. Der zweite Betriebszustand, wie ein Verriegelungszustand, kann in noch zuverlässigerer Weise bestimmt werden.

Insbesondere bei dem automatischen Bewegungsmechanismus vorzugsweise in Form eines Verriegelungsmechanismus mit einem Deckelantrieb ist es vorteilhaft, zusätzlich zu der beschriebenen magnetfeldbasierten Erkennung des Deckels bzw. des Verriegelungszustands einen mechanischen Erkennungspfad zu nutzen. Vorteilhafterweise kann die Bewegung der zum Verfahren, insbesondere zum Verschließen bzw. Verriegeln des Deckels, genutzten Antriebselemente des Deckelantriebs erfasst und ausgewertet werden. Basierend auf der Auswertung kann auf die Anwesenheit und die (korrekte) Positionierung, insbesondere Verriegelung, des Deckels geschlossen werden. Durch die resultierende Redundanz ist insbesondere eine Überwachung und/oder Fehlerdiagnose beider Detektionspfade möglich. Hierdurch kann die Sicherheit noch weiter verbessert werden.

Bei einer bevorzugten Ausführungsform kann der Deckel beim Verschließen bzw. Verriegeln relativ zum Speisenaufnahmeelement bewegt werden. Das Bewegen des Deckels umfasst insbesondere auch das Bewegen nur eines Teils des Deckels. Beispielsweise kann ein Deckel durch eine Drehbewegung bajonettiert und damit insbesondere verriegelt werden. Abhängig davon, ob ein Deckel aufgesetzt ist oder nicht, erreicht der Deckelantrieb verschiedene Endpositionen. Um diese zu bestimmen, kann insbesondere als Deckelantriebsparameter die Position und/oder der Aktorstrom erfasst werden.

Durch einen Abgleich mit dem erfassten Sensorsignal, insbesondere dem ersten Sensordatum, können die jeweiligen Detektionsergebnisse gegeneinander plausibilisiert werden. Insbesondere kann geprüft werden, ob die Endposition des Deckelantriebs im gleichen Zeit- bzw. Positionsfenster erreicht wird, innerhalb dessen auch die Detektionseinrichtung das erste Sensordatum erfasst hat, das den zweiten Betriebszustand, wie den Zustand "Deckel verriegelt" bzw. den Verriegelungszustand, repräsentiert. Vorzugsweise nur wenn beide Detektionsergebnisse zeitlich zusammenpassen, also in dem gleichen Zeitfenster detektiert werden, kann der Deckel als (tatsächlich korrekt) positioniert, insbesondere verriegelt, bewertet werden. Hierdurch können eine Manipulation erschwert und die korrekte Funktion der Detektionseinrichtung während des Betriebs geprüft werden.

Ein noch weiterer Aspekt der Anmeldung ist ein Verfahren zum Bestimmen bzw. Detektieren eines zweiten Betriebszustands (bzw. der zweiten Betriebsposition des Deckels) bei einer zuvor beschriebenen Gefäßanordnung. Das Verfahren umfasst:
- Erhalten, durch eine Detektionseinrichtung, eines durch das magnetfeldbasierte Sensorelement ausgegebenen ersten Sensordatum, und
- Detektieren, durch die Detektionseinrichtung, des zweiten Betriebszustands der Gefäßanordnung, basierend auf dem erfassten ersten Sensordatum und mindestens einem Positionskriterium.

Die Detektionseinrichtung kann insbesondere eine zuvor beschriebene Detektionseinrichtung sein. Vorzugsweise kann eine Gerätebasis eines zuvor beschriebenen Küchengeräts die Detektionseinrichtung umfassen. Bei Varianten der Anmeldung kann auch die Gefäßanordnung die Detektionseinrichtung umfassen.

Das Verfahren kann insbesondere zum Bestimmen eines Verriegelungszustands bei einer zuvor beschriebenen Gefäßanordnung eines zuvor beschrieben Küchengeräts verwendet werden. Vorzugweise kann das Verfahren ferner zum Identifizieren des Deckeltyps verwendet werden, wie zuvor beschrieben wurde.

Ein Modul, eine Einrichtung oder dergleichen kann zumindest teilweise durch Hardwareelemente und/oder Softwareelemente realisiert sein. Grundsätzlich können Daten unmittelbar übertragen oder zunächst gesammelt und zwischengespeichert werden, um sie dann z.B. zu bestimmten Zeitpunkten zusammen zu übertragen. Ferner beziehen sich die Begriffe, wie "oben", "obere", "unten", "untere" etc., auf die vertikal zu einer horizontalen Ebene verlaufende Richtung und auf eine auf einer horizontalen Fläche aufgestellte/s Gefäßanordnung und/oder Küchengerät. Sofern nichts anderes angegeben ist, dienen Ausdrücke wie "erstens", "zweitens" etc. lediglich der Unterscheidung zweier Elemente und geben keine Reihenfolge an.

Die Merkmale der Gefäßanordnungen, Küchengeräte und Verfahren sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, die anmeldungsgemäße Gefäßanordnung, das anmeldungsgemäße Küchengerät und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Gefäßanordnung gemäß der vorliegenden Anmeldung,
- Fig. 2a bis 2c: schematischen Ansichten eines Ausführungsbeispiels eines Küchengeräts gemäß der vorliegenden Anmeldung,
- Fig. 3a: eine schematische Ansicht eines weiteren Ausführungsbeispiels einer Gefäßanordnung gemäß der vorliegenden Anmeldung,
- Fig. 3b: eine schematische Ansicht eines Ausführungsbeispiels einer Spule gemäß der vorliegenden Anmeldung,
- Fig. 4: ein Diagramm eines beispielhaften Induktivitätswerteverlauf,
- Fig. 5: eine schematische Ansicht eines weiteren Ausführungsbeispiels eines Küchengeräts gemäß der vorliegenden Anmeldung,
- Fig. 6a: eine schematische Draufsicht eines weiteren Ausführungsbeispiels einer Gefäßanordnung gemäß der vorliegenden Anmeldung,
- Fig. 6b: schematische Ansichten der Gefäßanordnung nach Fig. 6a in verschiedenen Deckelzuständen und mit einem beispielhaften Induktivitätswerteverlauf,
- Fig. 7: eine schematische Ansicht eines weiteren Ausführungsbeispiels eines Küchengeräts gemäß der vorliegenden Anmeldung,
- Fig. 8: eine schematische Ansicht eines weiteren Ausführungsbeispiels eines Küchengeräts gemäß der vorliegenden Anmeldung,
- Fig. 9: eine schematische Ansicht eines weiteren Ausführungsbeispiels eines Küchengeräts gemäß der vorliegenden Anmeldung,
- Fig. 10: schematische Ansichten eines Ausführungsbeispiels einer Gefäßanordnung gemäß der vorliegenden Anmeldung in verschiedenen Deckelzuständen und einen beispielhaften Induktionswerteverlauf,
- Fig. 11: eine schematische Ansicht eines weiteren Ausführungsbeispiels eines Küchengeräts gemäß der vorliegenden Anmeldung,
- Fig. 12: verschiedene beispielhafte Zustände bei einem Ausführungsbeispiel eines Küchengeräts gemäß der vorliegenden Anmeldung mit einem Deckelantrieb,
- Fig. 13: beispielhafte Signalverläufe bei einem Ausführungsbeispiel eines Küchengeräts gemäß der vorliegenden Anmeldung mit einem Deckelantrieb,
- Fig. 14: weitere beispielhafte Signalverläufe bei einem Ausführungsbeispiel eines Küchengeräts gemäß der vorliegenden Anmeldung mit einem Deckelantrieb, und
- Fig. 15: ein Diagramm eines Ausführungsbeispiels eines Verfahrens gemäß der vorliegenden Anmeldung.

Nachfolgend werden für ähnliche Elemente ähnliche Bezugszeichen verwendet.

Insbesondere wird in den nachfolgenden Ausführungsbeispielen beispielhaft von einem Topf als Speisenaufnahmeelement ausgegangen. Es versteht sich, dass die Ausführungen auf andere Speisenaufnahmeelemente übertragen werden können. Ferner wird in den nachfolgenden Ausführungsbeispielen beispielhaft von einer unverriegelten Position als erste Betriebsposition, einer verriegelten Position als zweite Betriebsposition, einem Verriegelungskriterium als Positionskriterium und einem Verriegelungszustand als einen zweiten Betriebszustand ausgegangen. Auch hier können die Beispiele in einfacher Weise auf andere Betriebspositionen und/oder Betriebszustände übertragen werden.

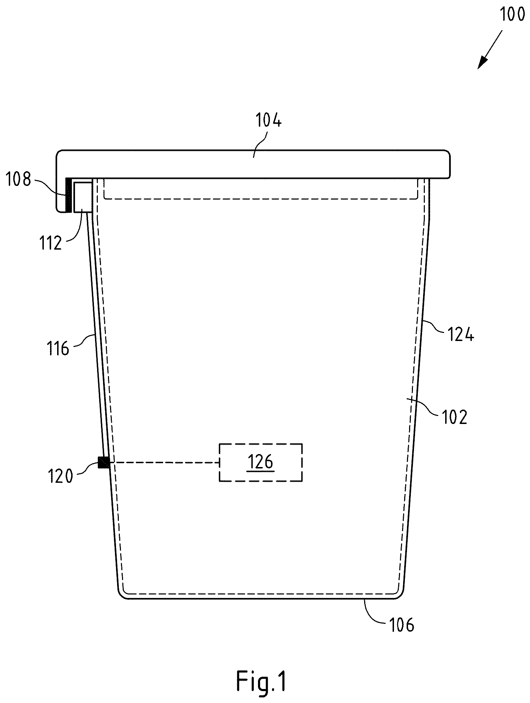

Die Figur 1 zeigt eine schematische Ansicht eines Ausführungsbeispiels einer Gefäßanordnung 100 gemäß der vorliegenden Anmeldung für ein Küchengerät, insbesondere eine Küchenmaschine eingerichtet zum zumindest teilweise automatisierten Zubereiten von Speisen. Die dargestellte Gefäßanordnung 100 umfasst einen Topf 102 und mindestens einen ersten Deckel 104. Der Topf 102 weist eine umlaufende Topfwandung 124 und einen Topfboden 106 auf.

Der Deckel 104 ist eingerichtet zum Verschließen einer Öffnung des Topfs 102. Dieser verschlossene Zustand der Gefäßanordnung 100 ist in der Figur 1 dargestellt. Insbesondere befindet sich der erste Deckel 104 in der Figur 1 in der verriegelten Position. Dies meint, dass der erste Deckel 104 mit dem Topf 102 (korrekt) mechanisch verriegelt ist, die Gefäßanordnung 100 also in dem Verriegelungszustand ist.

Der Deckel 104 ist relativ bewegbar zu dem Topf 102, insbesondere zwischen einer unverriegelten Position und der verriegelten Position. Der Verriegelungsmechanismus kann beispielsweise eine Bajonett-Verriegelung oder eine ähnliche mechanische Verriegelung sein.

Wie ferner zu erkennen ist, weist der der Deckel 104 mindestens ein erstes magnetfeldbasiertes Gegenelement 108 auf. Der Topf 102 weist mindestens ein mit einer Detektionseinrichtung 126 verbindbares magnetfeldbasiertes Sensorelement 112 auf. Wie dargestellt, kann beispielsweise eine leitungsgebundene Verbindung 116 zwischen dem Sensorelement 112 und einem unteren Topfkontakt 120 vorhanden sein. An dem unteren Topfkontakt 120 kann die Detektionseinrichtung 126 angeschlossen sein.

Die Detektionseinrichtung 126 ist eingerichtet zum Detektieren eines Verriegelungszustands des Deckels 104, basierend auf einem ersten Sensordatum, wie noch näher beschrieben wird. Beispielsweise kann der Topf 102 die Detektionseinrichtung 126 umfassen, wie durch die gestrichelten Linien in der Figur 1 angedeutet ist.

Das magnetfeldbasierte Sensorelement 112 ist eingerichtet zum Ausgeben des ersten Sensordatums nur bei einer Detektion des ersten magnetfeldbasierten Gegenelements 108 in dem Erfassungsbereich des magnetfeldbasierten Sensorelements 112. Das mindestens eine erste magnetfeldbasierte Gegenelement 108 ist in bzw. an dem Deckel 104 (und insbesondere relativ zu dem Sensorelement 112 des Topfs 102) derart angeordnet, dass das magnetfeldbasierte Gegenelement 108 nur dann in dem Erfassungsbereich des magnetfeldbasierten Sensorelements 112 ist bzw. gelangen kann, wenn sich der Deckel 102 in der verriegelten Position befindet.

Anders ausgedrückt, eine Magnetfeldänderung, die zur Ausgabe des ersten Sensordatums führt bzw. dieses darstellt, kann durch das magnetfeldbasierte Sensorelement 112 nur dann detektiert werden, wenn sich der Deckel 104 in der verriegelten Position befindet, so dass das Gegenelement 108 in dem Erfassungsbereich des Sensorelements 112 ist.

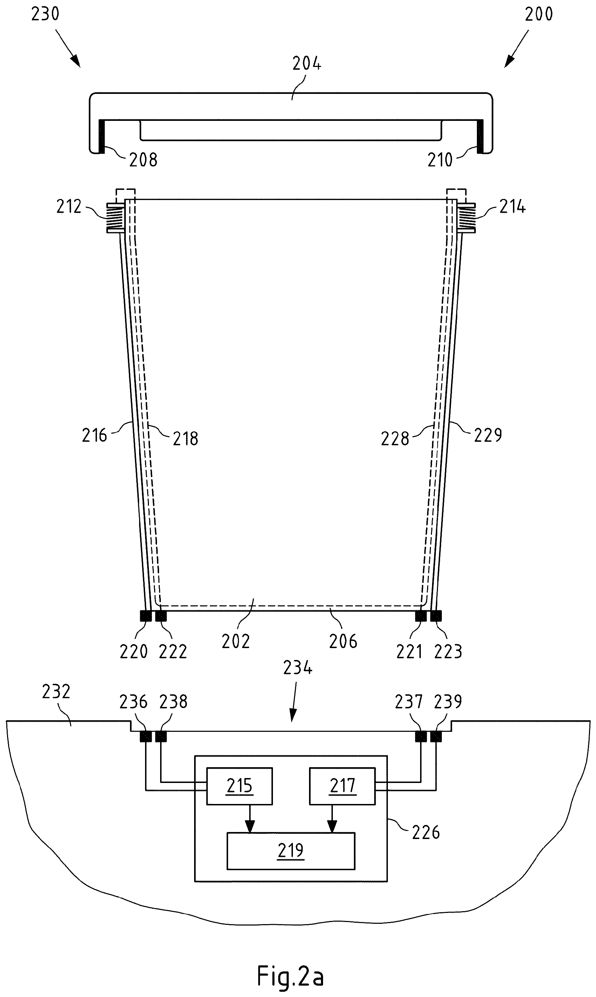

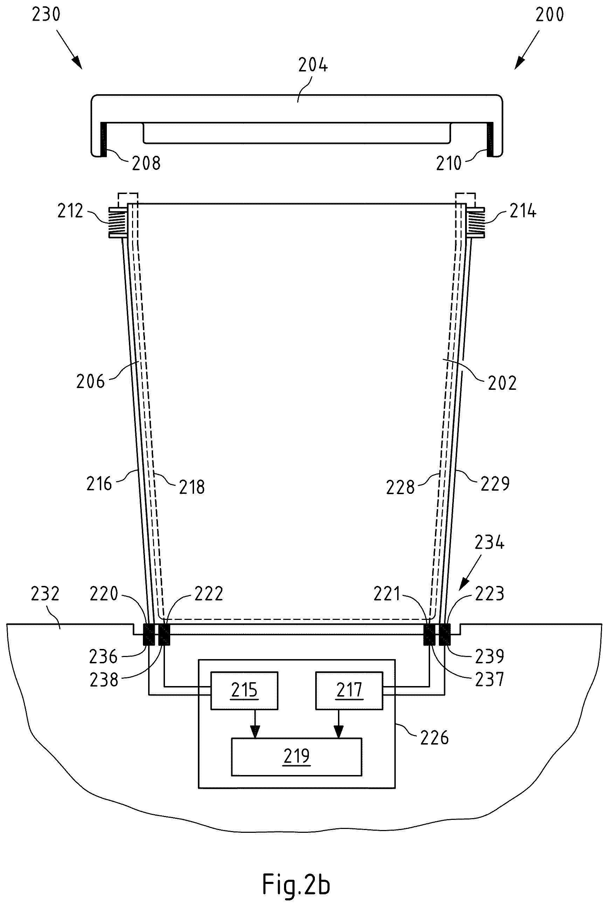

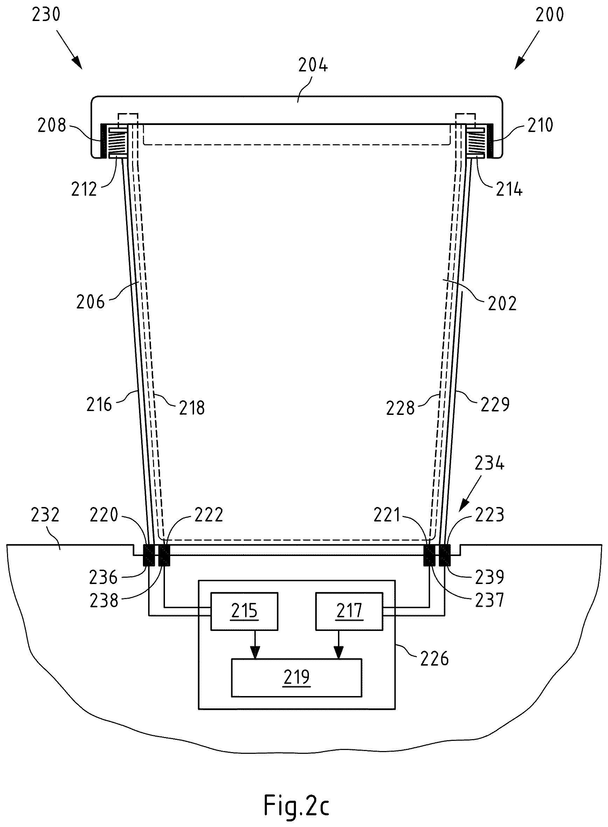

Die Figuren 2a bis 2c zeigen schematische Ansichten eines Ausführungsbeispiels eines Küchengeräts 230 gemäß der vorliegenden Anmeldung, insbesondere mit einer Gefäßanordnung 200. In der Figur 2a ist der Topf 202 nicht in einer Topfaufnahme 234 einer Gerätebasis 232 des Küchengeräts 230 angeordnet und der Deckel 204 ist nicht auf dem Topf 202 aufgesetzt. In der Figur 2b ist der Topf 202 in der Topfaufnahme 234 der Gerätebasis 232 des Küchengeräts 230 angeordnet und der Deckel 204 ist nicht auf dem Topf 202 aufgesetzt. In der Figur 2c ist der Topf 202 in der Topfaufnahme 234 der Gerätebasis 232 des Küchengeräts 230 angeordnet und der Deckel 204 ist auf dem Topf 202 aufgesetzt (befindet sich insbesondere in der verriegelten Position).

Das magnetfeldbasierte und vorliegend implementierte Detektionskonzept ist insbesondere ein induktionsbasiertes Induktionskonzept. Vorliegend umfasst der Topf 202 als magnetfeldbasierte Sensorelemente 212, 214 zwei Spulen 212, 214. Bei anderen Varianten der Anmeldung kann eine andere Anzahl an Spulen vorgesehen sein.

Wie zu erkennen ist, sind die Spulen 212, 214 an dem oberen Topfrand (der die Öffnung des Topfs 202 bildet) und insbesondere an im Wesentlichen gegenüberliegenden Topfrandseiten angeordnet.

Ein erster Spulenkontakt der ersten Spule 212 ist über eine erste elektrische Topfverbindung 216 mit einem ersten unteren Topfkontakt 220 verbunden. Ein zweiter Spulenkontakt der ersten Spule 212 ist über eine zweite elektrische Topfverbindung 218 mit einem ersten unteren Topfkontakt 222 verbunden. Ein erster Spulenkontakt der zweiten Spule 214 ist ferner über eine dritte elektrische Topfverbindung 228 mit einem dritten unteren Topfkontakt 221 verbunden. Schließlich ist ein zweiter Spulenkontakt der zweiten Spule 214 über eine vierte elektrische Topfverbindung 229 mit einem vierten unteren Topfkontakt 223 verbunden. Die Anzahl und die Position der unteren Topfkontakte 220, 221, 222, 223 an dem Topfboden korrespondiert insbesondere zu der Anzahl und Position der Basiskontakte 236, 237, 238, 239 der Gerätebasis 232. Dies erlaubt eine elektrische Verbindung der unteren Topfkontakte 220, 221, 222, 223 mit einer in der Gerätebasis 232 integrierten Detektionseinrichtung, wenn sich der Topf 202 (ordnungsgemäß) in der Topfaufnahme 234 befindet. Die Topfaufnahme 234 ist eingerichtet zum Aufnehmen des Topfs 202, insbesondere zumindest des Topfbodens 206.

Das mindestens eine magnetfeldbasierte Gegenelement 208, 210 (vorliegend sind beispielhaft zwei dargestellt) ist insbesondere ein aus einem induktivitätsbeeinflussenden Material gebildetes Induktionselement 208, 210. Vorzugsweise kann ein Induktionselement 208, 210 ein Flachelement 208, 210 sein, das insbesondere aus einem weichmagnetisierten Metall oder einem nichtmagnetischen Metall hergestellt ist.

Vorzugsweise können die Induktionselemente 208, 210 (analog zu den Spulen 212, 214) an dem Deckelrand und insbesondere an im Wesentlichen gegenüberliegenden Deckelrandseiten angeordnet sein.

Nur in dem verriegelten Zustand des Deckels 204 (vgl. Fig. 2c) gelangen die Induktionselemente 208, 210 in den jeweiligen Erfassungsbereich der Spulen 212, 214. Nur in diesem Fall wird durch das jeweilige Induktionselement 208, 210 das durch die jeweilige Spule 212, 214 erzeugte Magnetfeld beeinflusst. Hieraus resultiert ein geänderter Induktionswert der jeweiligen Spule 212, 214. Dies kann durch die Spule 212 als erstes Sensordatum ausgegeben werden und insbesondere durch die Detektionseinrichtung 226 detektierbar sein.

Wie bereits beschrieben wurde, umfasst vorliegend die Gerätebasis 232 eine mit den Basiskontakten 236 bis 239 elektrisch gekoppelte Detektionseinrichtung 226. Die Detektionseinrichtung 226 kann insbesondere in der Gerätesteuerung des Küchengeräts 230 integriert sein. Bei Varianten der Anmeldung kann die Detektionseinrichtung auch in dem Topf integriert sein. Die Detektionseinrichtung kann beispielsweise im Topf integriert sein, falls der Topf mit einer intelligenten Schnittstelle ausgestattet ist und in dem Topf ein entsprechender (kleiner) Controller integriert ist.

Die Detektionseinrichtung 226 ist eingerichtet zum Detektieren bzw. Bestimmen des Verriegelungszustands, basierend auf dem mindestens einen ersten Sensordatum und insbesondere einem Verriegelungskriterium. Erfüllt das erfasste Sensorsignal bzw. das hierin enthaltende erste Sensordatum das Verriegelungskriterium (beispielsweise ein vordefinierter elektrischer Größenbereich, vorzugsweise ein Induktionswertebereich), dann kann durch die Detektionseinrichtung 226 der Verriegelungszustand detektiert bzw. festgestellt werden. Bei einer Nicht-Erfüllung kann durch die Detektionseinrichtung 226 der Nicht-Verriegelungszustand detektiert bzw. festgestellt werden.

Vorzugsweise kann vorliegend durch ein erstes Messmodul 215 der Detektionseinrichtung 226 ein erster Induktionswert der ersten Spule 212 bestimmt werden, insbesondere gemessen werden. Das erste elektrische Messmodul 215 der Detektionseinrichtung 226 kann insbesondere eine erste elektrische Größe (z.B. einen Strom oder eine Spannung) an die Spule 212 anlegen und eine resultierende elektrische Größe (eine Spannung bzw. einen Strom) messen. Aus den Größen Strom und Spannung kann durch die Detektionseinrichtung 226 der Induktionswert der ersten Spule 212 bestimmt werden. In entsprechender Weise kann der Induktionswert der zweiten Spule 214 beispielsweise durch ein weiteres Messmodul 217 der Detektionseinrichtung 226 bestimmt werden.

Die bestimmten Induktionswerte können einem Auswertemodul 219 der Detektionseinrichtung 226 bereitgestellt werden. Das Auswertemodul 219 kann insbesondere die Induktionswerte in vorbeschriebener Weise mit mindestens einem Verriegelungskriterium vergleichen. Bei einer Erfüllung des mindestens einen Verriegelungskriteriums kann auf einen Verriegelungszustand des Deckels geschlossen werden.

Das mindestens eine Verriegelungskriterium kann beispielsweise einen Induktionswertebereich angeben, bei dem der Verriegelungszustand vorliegt. Durch einen Vergleich der bestimmten Induktionswerte mit dem vordefinierten Induktionswertebereich kann die Detektionseinrichtung 226 detektieren bzw. feststellen, ob das Verriegelungskriterium erfüllt ist oder nicht, also ein Verriegelungszustand vorliegt oder nicht.

Vorzugsweise kann mindestens eine Gerätefunktion des Küchengeräts 230 nur bei einem detektierten Verriegelungszustand durch die Detektionseinrichtung 226 freigegeben werden. Wenn ein Nicht-Verriegelungszustand detektiert wird, kann die mindestens eine Gerätefunktion gesperrt bzw. blockiert bleiben.

Befindet sich der Topf 202, wie in Figur 2a dargestellt, nicht auf der Gerätebasis 232 so sind die elektrischen Kontakte 220 bis 223 bzw. 236 bis 239 offen. Insbesondere die (nicht dargestellte) Gerätesteuerung der Gerätebasis 232 kann erkennen, dass kein Topf 202 aufgesetzt ist.

In der Figur 2b befindet sich der Topf 202 auf der Gerätebasis 232, so dass die elektrische Verbindung zu den Spulen 212, 214 gegeben ist. Der Deckel 204 ist jedoch nicht aufgesetzt bzw. nicht in der definierten Verriegelungsposition. Der jeweilige Induktivitätswert der Spulen 212, 214 ist somit unbeeinflusst und entspricht dem Ausgangswert. Durch die Auswertung der Induktivitätswerte durch die Detektionseinrichtung 226 kann erkannt werden, dass der Deckel 204 nicht verriegelt ist bzw. ein Nichtverriegelungszustand vorliegt.

Wenn sich der Deckel 204, wie in Figur 2c dargestellt, in der Verriegelungsposition befindet, so werden die Induktivitätswerte der jeweiligen Spule 212, 214 beeinflusst. Dies kann mit Hilfe der beschriebenen Induktivitätsmessung erkannt werden. Durch Auswertung der Induktivitätswerte kann so der Verriegelungszustand des Deckels 204 bestimmt werden. Basierend auf dieser Information können dann bestimmte Gerätefunktionen freigeschaltet werden, z.B. die Bewegung eines Zerkleinerungswerkzeugs.

Die Verwendung mehrerer Spulen 212, 214 an unterschiedlichen Stellen des Topfumfangs hat den Vorteil, dass die Position des Deckels 204 an zwei Stellen erfasst wird, so dass auch erkannt werden kann, wenn der Deckel 204 fehlerhaft nur einseitig aufliegt und somit nicht korrekt verriegelt ist.

Wie bereits beschrieben wurde, kann vorzugsweise nicht nur der Verriegelungszustand detektiert werden, sondern zusätzlich auch der Deckeltyp des mit dem Topf 202 verriegelten Deckels 204. Mit steigender Anzahl von Sensorelementen 212, 214 kann auch die Zahl an unterschiedlichen, eindeutig identifizierbaren Deckeltypen erhöht werden.

In diesem Ausführungsbeispiel sind am oberen Rand des Topfes zwei Spulen 212, 214 befestigt, deren (augenblickliche) Induktivitäten bzw. Induktivitätswerte unabhängig voneinander messbar sind. Der Deckel 204 kann vorzugsweise durch eine Drehbewegung geschlossen (also in die verriegelte Position bewegt) und dabei insbesondere bajonettiert (verriegelt) werden. Am Deckel 204 sind beispielsweise Metallplatten 208, 210 als induktivitätsbeeinflussende Induktionselemente 208, 210 befestigt. Wie bereits beschrieben wurde, sind diese Elemente 208, 210 so angeordnet, dass diese sich nur dann unmittelbar im Erfassungsbereich der Spulen 212, 214 befinden, wenn der Deckel 204 (korrekt) verriegelt ist.

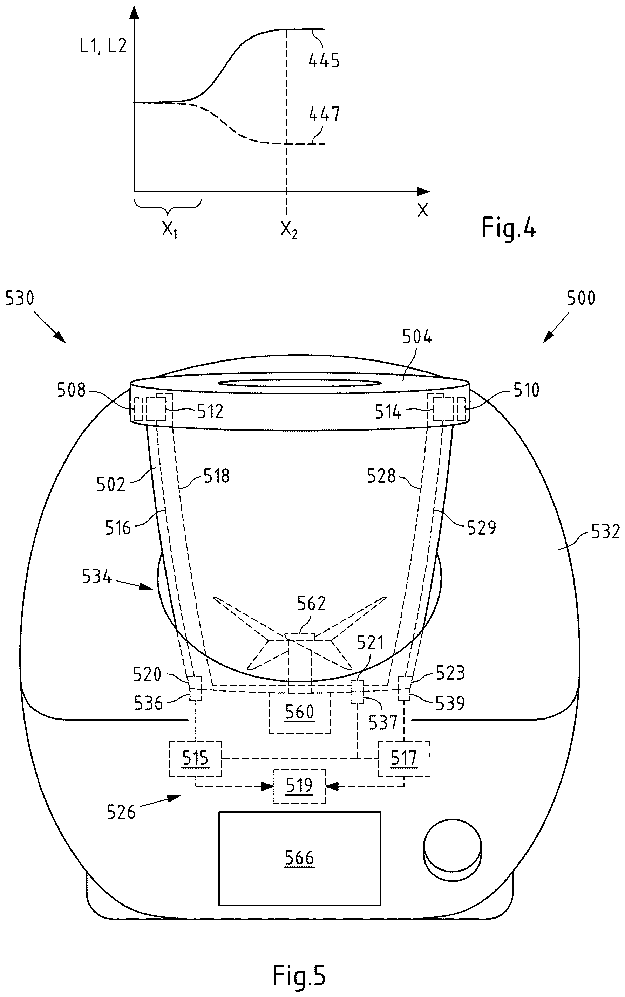

Abhängig von dem gewählten Material bewirken die Metallplatten eine Vergrößerung oder Verkleinerung der Spuleninduktivität. Beispielsweise steigt die Induktivität bei einer weichmagnetischen Metallplatte (vgl. Bezugszeichen 445 in Figur 4), da diese den magnetischen Widerstand der Spule reduziert. Bei einer Metallplatte aus nichtmagnetischem, elektrisch leitfähigem Material (vgl. Bezugszeichen 447 in Figur 4) dominiert hingegen der Wirbelstromeffekt und der Induktivitätswert der Spule sinkt. Bei X1 ist der Deckel offen, während bei X2 der Deckel verriegelt ist. L1 und L2 bezeichnen die Spuleninduktivitäten.

Durch verschiedene Kombinationen von Metallplatten-Materialien auf der linken und rechten Seite des Deckels 204 bzw. als Induktionselement 1 und 2 (vgl. Ausführungen zur Tabelle 1) können verschiedene Deckeltypen eindeutig codiert werden. Diese Codierungstabelle kann als Deckeltypkriterien in der Detektionseinrichtung 226 gespeichert sein. Abhängig davon, ob im verriegelten Zustand beide Induktivitäten zunehmen, beide abnehmen oder Induktionselement 1 und 2 unterschiedliche Änderungen erfahren, kann auf den jeweiligen Deckeltyp geschlossen werden.

Im dargestellten Beispiel mit zwei Spulen 212, 214 können vier Deckeltypen zuverlässig durch Auswertung der Induktionswerte, insbesondere der Induktionswerteverläufe bzw. der Änderungsrichtungen der Induktivitäten, unterschieden werden. Es ist prinzipiell auch möglich, durch Materialauswahl oder Formgebung der Metallplatten 208, 210 Zwischenwerte der Induktivität einer Spule zu erhalten und somit die Zahl unterscheidbarer Deckeltypen weiter zu erhöhen, wie bereits beschrieben wurde.

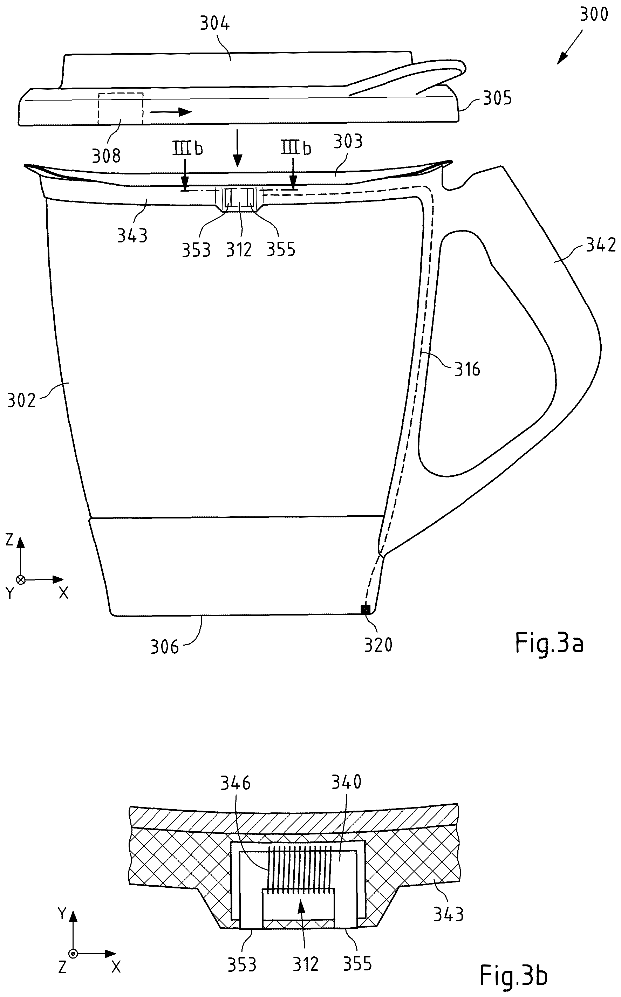

Die Figur 3 zeigt eine schematische Seitenansicht eines Ausführungsbeispiels einer Gefäßanordnung 300 gemäß der vorliegenden Anmeldung.

Der Topf 302 ist vorzugsweise teilweise aus Metall und teilweise aus Kunststoff gebildet. Insbesondere kann ein Abschnitt 342 aus Kunststoff gebildet sein. Dieser Abschnitt 342 kann auch den Griff bilden und einen an dem Topfrand 303 angeordneten zumindest teilweise, vorzugsweise vollständigen ringförmigen Teilabschnitt 343 aufweisen.

An dem oberen Topfrand 303 ist eine erste Spule 312 angeordnet. Vorzugsweise an der gegenüberliegenden Seite des oberen Topfrands 303 ist eine zweite (nicht gezeigte) Spule angeordnet. Die zumindest zwei elektrischen Topfverbindungen 316 verlaufen von der jeweiligen Spule 312, insbesondere durch den Abschnitt 342 zu den zumindest zwei unteren Topfkontakten 320. Insbesondere kann eine Topfverbindung 316 in dem Kunststoffabschnitt 342 integriert sein. Die zumindest zwei unteren Topfkontakte 320 sind insbesondere in bzw. an dem Topfboden 306 angeordnet.

Die Spulen 312, sind vorzugsweise in dem ringförmigen Teilabschnitt 343 aus Kunststoff eingebettet und vorzugsweise von einer Topfabdeckung 344 insbesondere in Form einer Blende 344 zumindest teilweise abgedeckt. Der Teilabschnitt 343 weist vorzugsweise einen Teil des Verriegelungsmechanismus auf. Insbesondere kann der Teilabschnitt 343 Konturen zur Verriegelung des Deckels 304 an dem Topf 302 in der definierten Verriegelungsposition aufweisen.

Eine Spule 312kann, wie in Fig. 3b dargestellt, vorzugsweise aus einem Joch 340 bzw. Spulenkern 340 gebildet sein. Das Joch 340 ist insbesondere ein U-förmiges Joch 340, welches z.B. als U-förmig gebogenes Blech aus weichmagnetischem Material ausgeführt sein kann.

Um dieses Joch 340 herum ist insbesondere die Spulenwicklung 346 angeordnet. Wie bereits beschrieben wurde, kann eine Spule 312 vorzugsweise von einer Kunststoffblende 344 verdeckt sein. Die Enden 353, 355 des Jochs 340 können insbesondere durch Aussparungen bzw. Öffnungen in der Blende 344 hindurchragen.

Wie der Figur 3a zu entnehmen ist, sind Induktionselemente 308an dem Deckel 304 angeordnet, insbesondere an dem äußeren Deckelrand 305. Wie zu erkennen sind, können die Induktionselemente 308, 310 als Flachelemente 308, 310 gebildet sein, insbesondere durch Metallplatten 308, 310. Lediglich beispielhaft haben die dargestellten Flachelemente 308, 310 eine rechteckförmige Form.

Die Figur 5 zeigt eine schematische Ansicht eines weiteren Ausführungsbeispiels des anmeldungsgemäßen Küchengeräts 530. Zur Vermeidung von Wiederholungen werden nachfolgend im Wesentlichen nur die Unterschiede zu den vorherigen Ausführungsbeispielen beschrieben und ansonsten auf die entsprechenden Ausführungen verwiesen.

Wie der Figur 5 insbesondere zu entnehmen ist, verfügen die Spulen 512, 514 in dem vorliegenden Ausführungsbeispiel über einen gemeinsamen dritten unteren Topfkontakt 521, der mit der Detektionseinrichtung 526 der Gerätebasis 532 verbunden ist. Die anderen beiden Spulenkontakte können jeweils getrennt voneinander zur Detektionseinrichtung 526 der Gerätebasis 532 geführt sein. Dies hat den Vorteil, dass durch eine entsprechende Detektionseinrichtung 526 die Spulen 512, 514 einzeln auswertbar sind, so dass Induktivitätsverläufe eindeutig den einzelnen Spulen 512, 514 zugeordnet werden können. Insbesondere gleichzeitig kann die Kontaktanzahl reduziert werden.

Wie zu erkennen ist, weist die Gerätebasis 532 einen Werkzeugantrieb 560 auf. Der Werkzeugantrieb 560 ist zum Antreiben bzw. Betreiben eines Küchengerätewerkzeugs 562 eingerichtet, welches sich insbesondere in dem Topf 502 befinden kann. Beispielhaft ist als Küchengerätewerkzeug 562 ein Schneidwerkzeug 562 dargestellt. Weiter kann die Küchenbasis eine Steuereinrichtung umfassen, die die eine Heizung, die im Topf 502 integriert ist, ansteuert und überwacht.

Es kann vorgesehen sein, dass das Küchengerätewerkzeug 562 abhängig von dem Deckeltyp des augenblicklich aufgesetzten Deckels 504 mit unterschiedlichen maximal zulässigen Antriebssollparameterwerten betrieben werden darf. Um dies sicherzustellen, kann die Detektionseinrichtung 526 vorzugsweise ein Beschränkungsmodul umfassen. Das (nicht gezeigte) Beschränkungsmodul kann eingerichtet sein zum Beschränken zumindest des maximal zulässigen Antriebssollparameterwerts, basierend auf dem identifizierten Deckeltyp und einem für den Deckeltyp (vordefinierten) Antriebskriterium. Jedem Deckeltyp kann ein vordefiniertes Antriebskriterium zugeordnet sein. Das Antriebskriterium kann den maximal zulässigen Antriebssollparameterwert oder einen entsprechenden Bereich definieren.

Optional kann das Küchengerät 530 über eine (optische) Anzeige 566 verfügen, beispielsweise ein Display. Die Anzeige 566 kann eingerichtet sein zum Anzeigen des identifizierten Deckeltyps. Optional kann eine Fehlermeldung und/oder eine Hinweismeldung angezeigt werden.

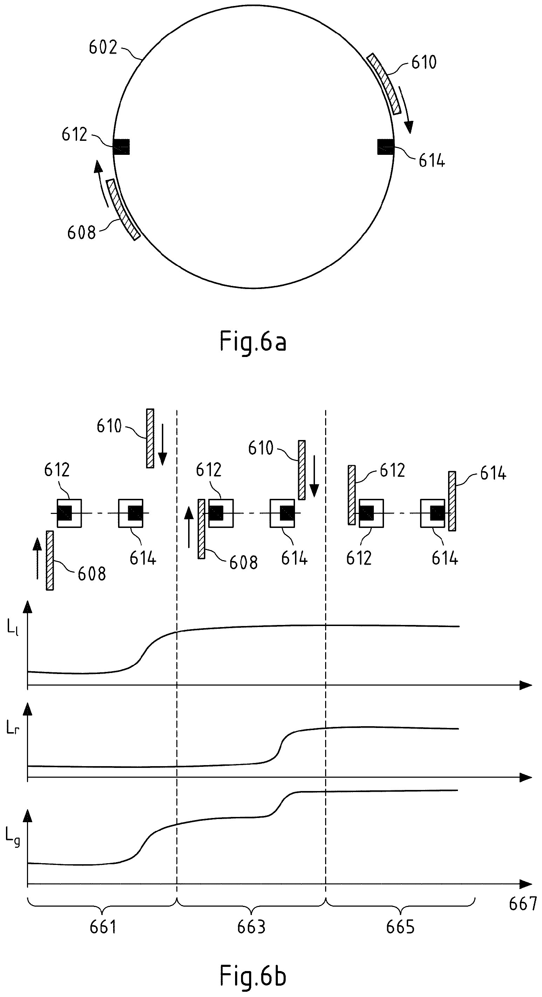

Eine weitere (zusätzliche) Möglichkeit, verschiedene Deckeltypen zuverlässig zu unterscheiden und insbesondere zu identifizieren, besteht darin, die Induktivität über dem Verriegelungsweg, der von der nicht-verriegelten Position zu der verriegelten Position zurückzulegen ist, zu beeinflussen. Dies kann beispielsweise durch Formgebung und/oder definierter Anordnung der Induktionselemente 608, 610 erfolgen. Dies ist beispielhaft in den Figuren 6a, 6b veranschaulicht.

Mit Lₗ ist der Induktivitätsverlauf der linken Induktivität (gebildet durch die Elemente 608, 612), mit Lᵣ der Induktivitätsverlauf der rechten Induktivität (gebildet durch die Elemente 610, 614) und mit L_{g} der Verlauf der Gesamtinduktivität (L_{g} = Lₗ + Lᵣ) bezeichnet. Während der Schließbewegung, also der Bewegung des (für eine bessere Übersicht nicht explizit gezeigten) Deckels von der unverriegelten Position (mit dem Bezugszeichen 661 bezeichnet; siehe auch linker Ausschnitt der Figur 6b) zu der verriegelten Position (mit dem Bezugszeichen 665 bezeichnet; siehe auch rechter Ausschnitt in Figur 6b), die insbesondere einer Drehung des Deckels entsprechen kann, kann der Induktivitätswerteverlauf beider Spulen 612, 614 bzw. linke Spule 612 und rechte Spule 614 ausgewertet werden. Mit dem Bezugszeichen 667 ist die Deckelposition bezeichnet und mit dem Bezugszeichen 663 die Zwischenposition des Deckels während des Schließvorgangs.

Es ergeben sich abhängig von der Anordnung und/oder Form der Induktionselemente 608, 610 unterschiedliche zeitliche Induktivitätswerteverläufe, die beispielshaft in den Diagrammen dargestellt sind. Durch Analyse der Verläufe der Induktivitätswerte der einzelnen Induktivitäten und/oder der Gesamtinduktivität kann dann auf den jeweiligen Deckeltyp geschlossen werden. Hierzu können als Deckeltypkriterien insbesondere entsprechende Induktivitätswerteverläufe vordefiniert und insbesondere in der Detektionseinrichtung gespeichert sein. Besonders bevorzugt sind bei diesem Ausführungsbeispiel automatische Verriegelungen/Verschlussarten mit (großem) Weg (z.B. Bajonett). Dies erhöht die Zuverlässigkeit der Detektion.

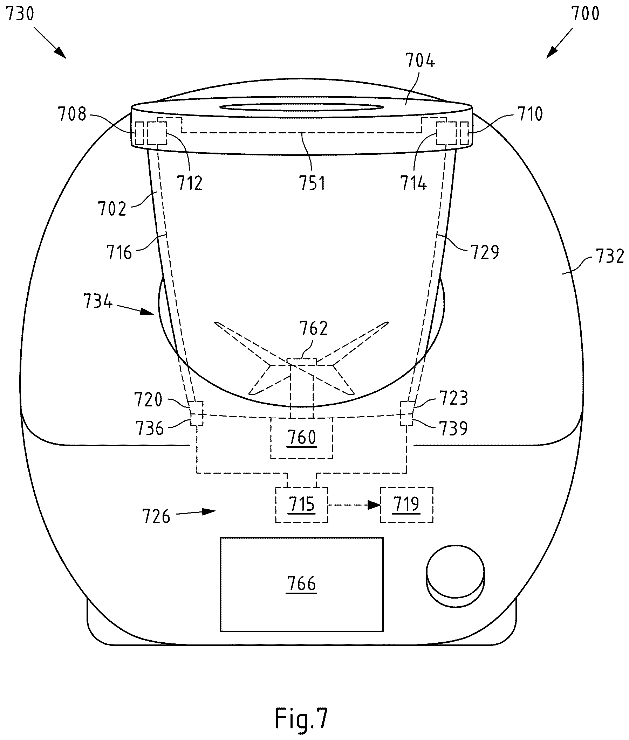

Die Figur 7 zeigt eine schematische Ansicht eines weiteren Ausführungsbeispiels des anmeldungsgemäßen Küchengeräts 730. Zur Vermeidung von Wiederholungen werden nachfolgend im Wesentlichen nur die Unterschiede zu den vorherigen Ausführungsbeispielen beschrieben und ansonsten auf die entsprechenden Ausführungen verwiesen.

In diesem Ausführungsbeispiel sind die Spulen 712, 714 über eine fünfte Topfverbindung 751 in Reihe geschaltet. Bei einer derartigen Anordnung ist insbesondere eine Auswertung der Summeninduktivität, wie in Figur 6b veranschaulicht, von Vorteil.

Die Reihenschaltung der Spulen 712, 714 bietet insbesondere die Möglichkeit, mit nur jeweils zwei Kontakten 720, 723, 736, 739 zur Gerätebasis 732 auszukommen. Wenn die Induktionselemente 708, 710 so angeordnet sind, dass beim Verschließen des Deckels 704 zunächst die Spule 712 und dann zusätzlich auch die weitere Spule 714 beeinflusst werden, dann steigt die Induktivität der Reihenschaltung in zwei Stufen an (vgl. Fig. 6b). Durch Auswerten des zeitlichen Verlaufs der Gesamtinduktivität (Summeninduktivität) kann dann geprüft werden, ob der Deckel 704 beidseitig in der korrekten Position ist, also in der verriegelten Position ist.

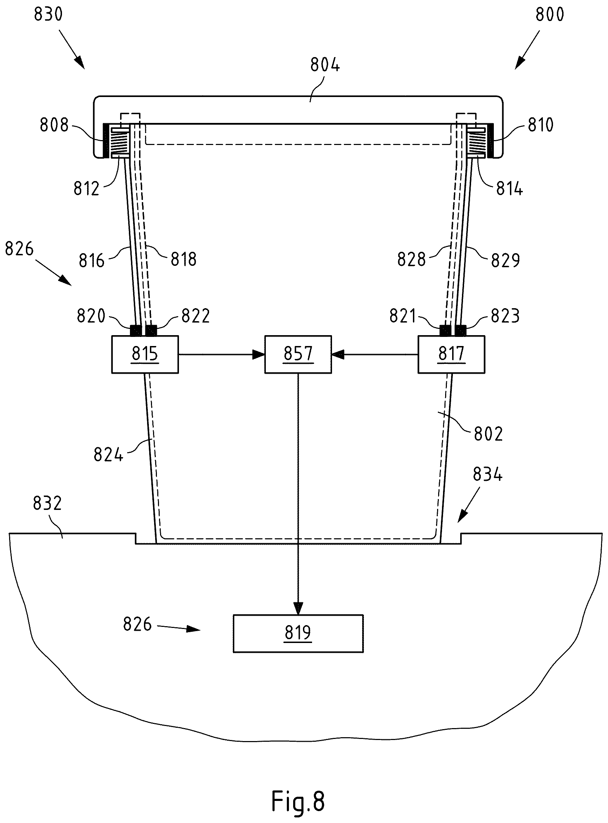

Die Figur 8 zeigt eine schematische Ansicht eines weiteren Ausführungsbeispiels des anmeldungsgemäßen Küchengeräts 830. Zur Vermeidung von Wiederholungen werden nachfolgend im Wesentlichen nur die Unterschiede zu den vorherigen Ausführungsbeispielen beschrieben und ansonsten auf die entsprechenden Ausführungen verwiesen.

Wie bereits beschrieben wurde, kann die Gefäßanordnung 800 die Detektionseinrichtung 826 zumindest teilweise umfassen. Vorliegend umfasst die Gefäßanordnung 800 das erste und das zweite Messmodul 815, 817. Ein (digitales) Kommunikationsmodul 857 der Detektionseinrichtung 826 kann eingerichtet sein zum Übertragen der gemessenen Induktionswerte an ein Auswertemodul 819. Das Auswertemodul 819 ist vorliegend in der Gerätebasis 832 integriert, insbesondere in der Gerätesteuerung. Bei Varianten der Anmeldung kann die Gefäßanordnung 800 auch das Auswertemodul umfassen.

Wie beschrieben wurde, kann auch eine Auswertung der gemessenen Werte am Topf 802 erfolgen, so dass zum Beispiel der Verriegelungszustand und der Deckeltyp ermittelt und in digitaler Form übertragen werden kann.

Dabei ist es auch möglich, z.B. Kalibrierdaten für die Induktivitäten in einer im Topf 802 integrierten Elektronik (z.B. Mikrocontroller) zu hinterlegen. Auch weitere Messwerte aus dem Topf 802 können so übertragen werden, so dass insgesamt eine Reduzierung der Kontaktanzahl möglich ist.

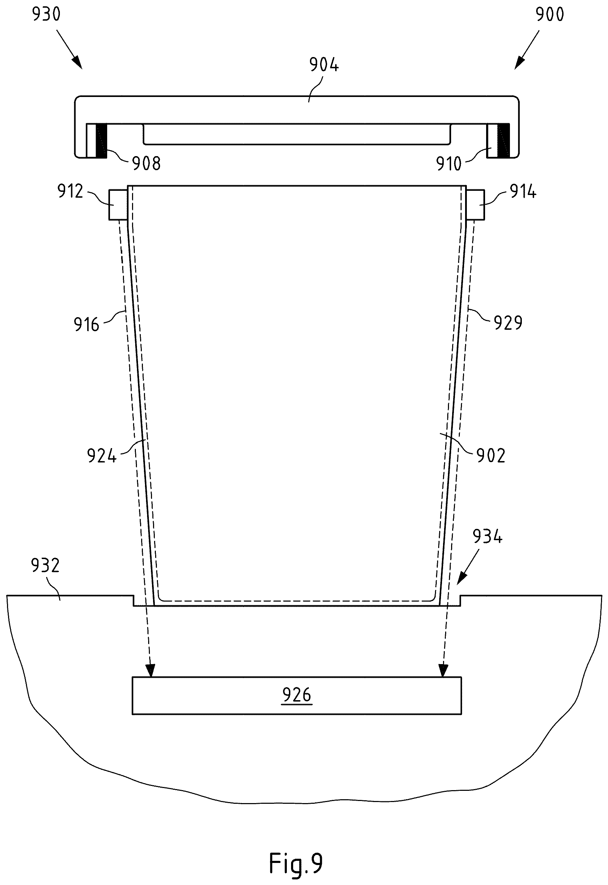

Die Figur 9 zeigt eine schematische Ansicht eines weiteren Ausführungsbeispiels des anmeldungsgemäßen Küchengeräts 930. Zur Vermeidung von Wiederholungen werden nachfolgend im Wesentlichen nur die Unterschiede zu den vorherigen Ausführungsbeispielen beschrieben und ansonsten auf die entsprechenden Ausführungen verwiesen.

Der wesentliche Unterschied besteht darin, dass anstelle einer Spule ein Magnetfeldsensor und anstelle eines Induktionselements ein Magnet verwendet wird.

So ist in diesem Ausführungsbeispiel das mindestens eine magnetfeldbasierte Sensorelement 912, 914 (vorliegend sind beispielhaft zwei Sensorelemente 912, 914 dargestellt) ein Magnetfeldsensor 912, 914. Vorzugsweise kann ein Magnetfeldsensor 912, 914 ein Hall-Sensor 912, 914 oder eine Reedschalter 912, 914 sein. Die Anordnung der Magnetfeldsensoren 912, 914 an dem Topf 902 kann ähnlich erfolgen wie die vorbeschriebene Anordnung der Spulen an einem Topf.

Ferner ist mindestens ein Magnet 908, 910 (vorliegend sind beispielhaft zwei Magnete 908, 910 vorgesehen) als magnetbasiertes Gegenelement 908, 910 in dem vorliegenden Ausführungsbeispiel vorgesehen. Die Anordnung der Magnete 908, 910 an dem Deckel 904 kann ähnlich erfolgen wie die vorbeschriebene Anordnung der Induktionselemente an einem Deckel.

Bei einer Bewegung des Deckels 904 in die verriegelte Position gelangt der mindestens eine Magnet 908, 910 in den Erfassungsbereich des mindestens einen Magnetfeldsensors 912, 914. Die Magnetfeldänderung ist von dem Magnetfeldsensor 912, 914 detektierbar. In Reaktion hierauf gibt der Magnetfeldsensor 912, 914 das erste Sensordatum aus.

Da der mindestens eine Magnet 908, 910 derart an dem Deckel 904 angeordnet ist, dass eine detektierbare Magnetfeldänderung, die zu einer Ausgabe des ersten Sensordatums führt, nur dann vorliegen kann, wenn sich der Deckel 904 in der verriegelten Position befindet, kann durch die Detektion des ersten Sensordatums in zuverlässiger Weise ein Verriegelungszustand des Deckels 904 detektiert werden.

Wie zu erkennen ist, ist jeder Magnetfeldsensor 912, 914 mit der Detektionseinrichtung 926 verbunden, um insbesondere zumindest das erste Sensordatum für eine Auswertung bereitzustellen. Die Auswertung kann ähnlich wie in den vorherigen Ausführungsbeispielen erfolgen.

Die am Deckel 904 angeordneten und zu dem Magnetfeldsensor 912, 914 korrespondierenden Gebermagnete 908, 910 lösen insbesondere, wie beschrieben wurde, bei geschlossenem und korrekt verriegeltem Deckel 904 ein Erkennungssignal bzw. das erste Sensordatum in den Magnetfeldsensoren 912, 914 aus. Eine Erkennung bzw. Identifizierung des Deckeltyps ist hierbei ebenfalls möglich, z.B. wenn Magnetfeldsensoren 912, 914 zum Einsatz kommen, die eine Auswertung der Magnetfeldrichtung des in dem Erfassungsbereich befindlichen Magneten 908, 910 erlauben. Abhängig von der Ausrichtung der Magnetpole ergibt sich dann für die unterschiedlichen Deckeltypen ein charakteristisches Signalmuster. Eine Identifizierung eines bestimmten Deckeltyps ist in dem Ausführungsbeispiel der Figur 9 insbesondere unter Nutzung der Tabelle 2 möglich, wie bereits beschrieben wurde.

Es ist auch möglich, bei weiteren Varianten der Anmeldung, dass ein Gegenelement in Form eines Gebermagnets am Topf angeordnet ist und im Deckel lediglich als weiteres Gegenelement ein Leitelement angeordnet ist, das Magnetfeld bei (korrekt) verriegeltem Deckel (in definierter Weise) durch bzw. zu dem zugehörigen Magnetfeldsensor leitet.

Die Anordnung der Detektionseinrichtung 926 für ein Magnetfeldsensor 912, 914 kann ähnlich wie bei der induktiven Erfassung im Topf oder in der Gerätebasis erfolgen. Ferner ist es denkbar, dass durch das Platzieren mehrerer Magnete der Signalverlauf beim Schließen mit analysiert wird, damit eine zuverlässigere Detektion erfolgen kann.

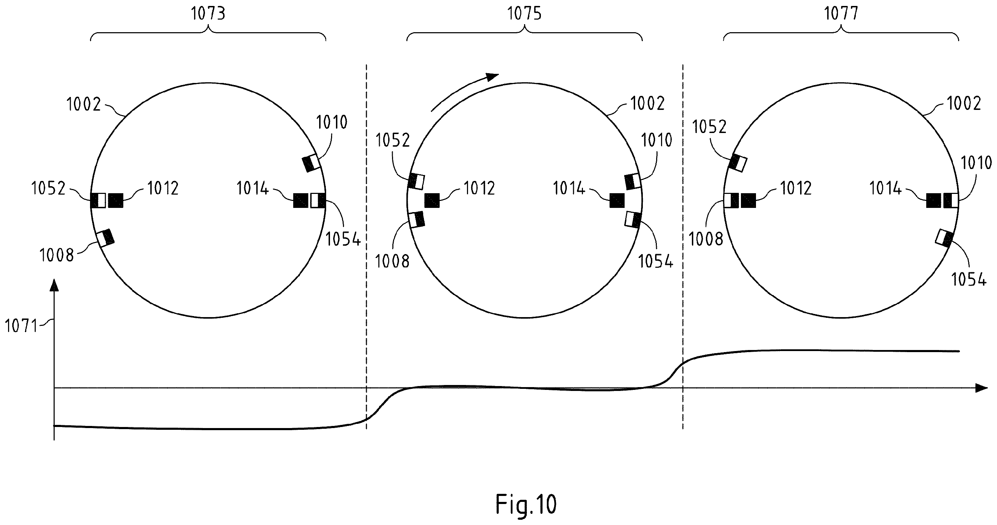

Die Figur 10 zeigt schematische Ansichten eines Ausführungsbeispiels einer Gefäßanordnung gemäß der vorliegenden Anmeldung in verschiedenen Deckelzuständen und einen beispielhaften Induktionswerteverlauf 1071 bzw. Signalverlauf der Sensoren 1071.

Die Gefäßanordnung kann ähnlich einer Gefäßanordnung in einem der vorherigen Figuren gebildet sein. Nachfolgend werden im Wesentlichen die Unterschiede der Gefäßanordnung zu den vorherigen Ausführungsbeispielen beschrieben.

Insbesondere weist der dargestellte Deckel erste Gegenelemente 1008, 1010 und Zusatzgegenelemente 1052, 1054 auf.

Die ersten Gegenelemente 1008, 1010 können beispielsweise Magnete 1008, 1010 mit einer ersten Polausrichtung sein und die Zusatzgegenelemente 1052, 1054 können Zusatzmagnete 1052, 1054 mit einer zweiten sich von der ersten Polausrichtung unterscheidenden Polausrichtung sein.

Die Zusatzmagnete 1052, 1054 sind derart an dem Deckel angeordnet, insbesondere an dem Deckelrand, dass eine Beeinflussung der Magnetfeldsensoren 1012, 1014 nur in der unverriegelten Position erfolgt, wie es in Figur 10 Induktion in dem linken Ausschnitt dargestellt ist.

Durch ein Auswerten des in dem unteren Ausschnitt der Figur 10 gezeigten Sensorsignalverlaufs 1071 kann zumindest festgestellt werden, ob sich der Deckel in der (definierten) unverriegelten Position (mit dem Bezugszeichen 1073 bezeichnet) befindet oder der Deckel 1010 sich in der definierten Verriegelungsposition befindet (mit dem Bezugszeichen 1077 bezeichnet). Die Position dazwischen, also insbesondere während der Verriegelungsbewegung, ist mit dem Bezugszeichen 1075 bezeichnet.

Dies ist in dem beispielhaften Sensorsignalverlauf in dem unteren Ausschnitt der Figur 10 dargestellt. In der unverriegelten Position 1073 kann durch die Detektionseinrichtung ein erster Sensorsignalverlauf bestimmt werden (insbesondere so lange, wie die genannten Zusatzmagnete 1052, 1054 in dem Erfassungsbereich der jeweiligen Magnetfeldsensoren 1012, 1014 sind.

Während der (Dreh-) Bewegung 1075 des Deckels von der unverriegelten Position in die verriegelte Position (mittlerer Ausschnitt der Figur 10) ist kein Magnet 1008, 1010, 1052, 1054 in einem Erfassungsbereich der Magnetfeldsensoren 1012, 1014. Daher nimmt das Signal einen Wert null an.

Bei Erreichen der verriegelten Position 1077 (rechter Ausschnitt der Figur 10) gelangen die Magnete 1008, 1010 in den jeweiligen Erfassungsbereich der Magnetfeldsensoren 1012, 1014. In dieser verriegelten Position wird durch die Detektionseinrichtung aufgrund der unterschiedlichen Polausrichtung ein anderer Sensorsignalverlauf detektiert (insbesondere so lange, wie die Magnete 1008, 1010 in den jeweiligen Erfassungsbereich der Magnetfeldsensoren 1012, 1014 vorhanden sind, also der Deckel in der verriegelten Position ist).

In einfacher und zuverlässiger Weise kann eine verriegelte Deckelposition von der unverriegelten Deckelposition unterschieden werden.

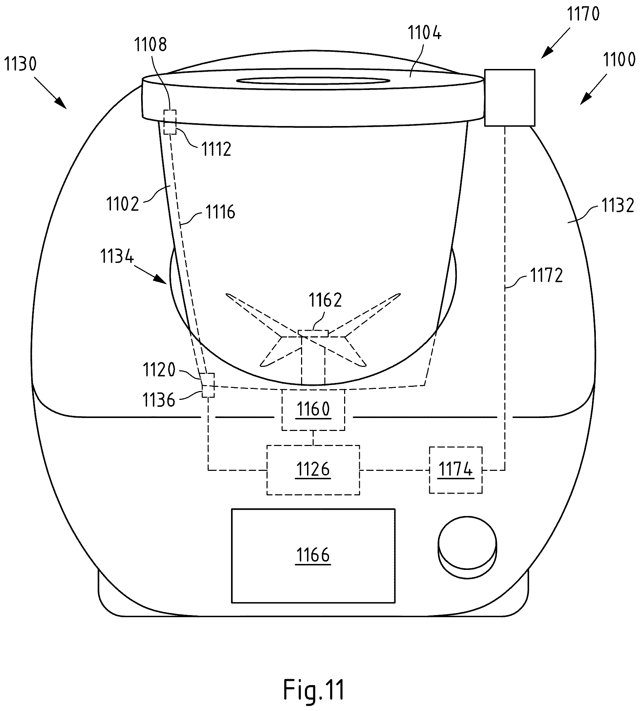

Die Figur 11 zeigt eine schematische Ansicht eines weiteren Ausführungsbeispiels eines Küchengeräts 1130 gemäß der vorliegenden Anmeldung. Zur Vermeidung von Wiederholungen werden nachfolgend im Wesentlichen nur die Unterschiede zu den vorherigen Ausführungsbeispielen beschrieben und ansonsten auf die entsprechenden Ausführungen verwiesen.

Das Küchengerät 1130 umfasst einen mechanischen Verriegelungsmechanismus 1170 mit einem Deckelantrieb 1174 (auch Verriegelungsaktor genannt). Der Deckelantrieb 1174 ist mechanisch mit dem Deckel 1104 über eine mechanische Verbindung 1172 gekoppelt, die grundsätzlich bekannt ist. Der Deckelantrieb 1174 kann eingerichtet sein zum (automatischen) Verfahren des Deckels 1104 zwischen einer unverriegelten Position des Deckels 1104 und einer verriegelten Position des Deckels 1104.

Die Detektionseinrichtung 1126 kann kommunikativ mit dem Deckelantrieb 1174 gekoppelt sein. Die Detektionseinrichtung 1126 kann insbesondere eingerichtet sein zum Erfassen, vorzugsweise Messen, von mindestens einem Deckelantriebsparameterwert (z.B. Position und/oder Aktorstrom). Die Detektionseinrichtung 1126 kann ferner eingerichtet sein zum Detektieren des Verriegelungszustands der Gefäßanordnung 1100, basierend auf dem erfassten Deckelantriebsparameterwert.

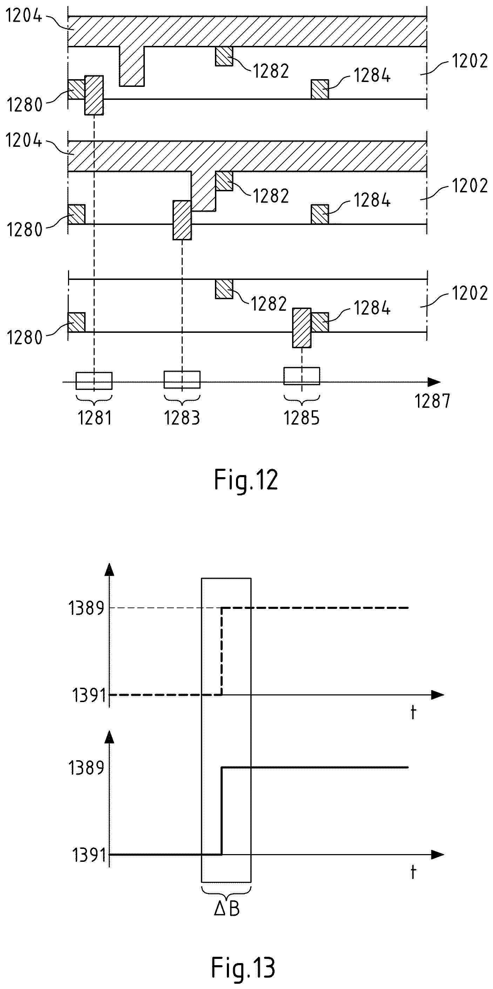

Eine mögliche Umsetzung dieser Detektion ist in der Figur 12 graphisch veranschaulicht. Der Deckel 1204 oder Teile des Deckels 1204 können beim Verschließen bzw. Verriegeln relativ zu dem Topf 1202 bewegt, beispielsweise durch eine Drehbewegung bajonettiert werden. Abhängig davon, ob ein Deckel 1204 aufgesetzt ist (vgl. die beiden oberen Ausschnitte der Figur 12) oder nicht (vgl. den unteren Ausschnitt der Figur 12) erreicht der Deckelantrieb verschiedene Endpositionen 1280, 1282, 1284, welche z.B. durch Messung, durch die Detektionseinrichtung, von Position und Aktorstrom ausgewertet und insbesondere bestimmt werden können.

In dem oberen Ausschnitt der Figur 12 ist der Deckel 1204 nicht verriegelt. Die Verriegelungsbewegung startet an der Endposition 1280, insbesondere in der unverriegelten Position. In dem mittleren Ausschnitt der Figur 12 ist ein Deckel 1204 vorhanden. Der Deckel 1204 ist bis zur zweiten Endposition 1282 bewegt worden. Der Deckel 1204 befindet sich daher in dem Verriegelungszustand bzw. in der verriegelten Position. In dem unteren Ausschnitt der Figur 12 ist kein Deckel vorhanden. Der Deckelantrieb erreicht die dritte Endposition 1284. Hieraus kann die Detektionseinrichtung folgern, dass kein Deckel vorhanden ist.

Mit dem Bezugszeichen 1287 ist die Achse als Position des Deckelantriebs bezeichnet. Bezugszeichen 1281 bezeichnet die nicht verriegelte Position, Bezugszeichen 1283 die verriegelte Position, und Bezugszeichen 1285 den Zustand, dass kein Deckel vorhanden ist.

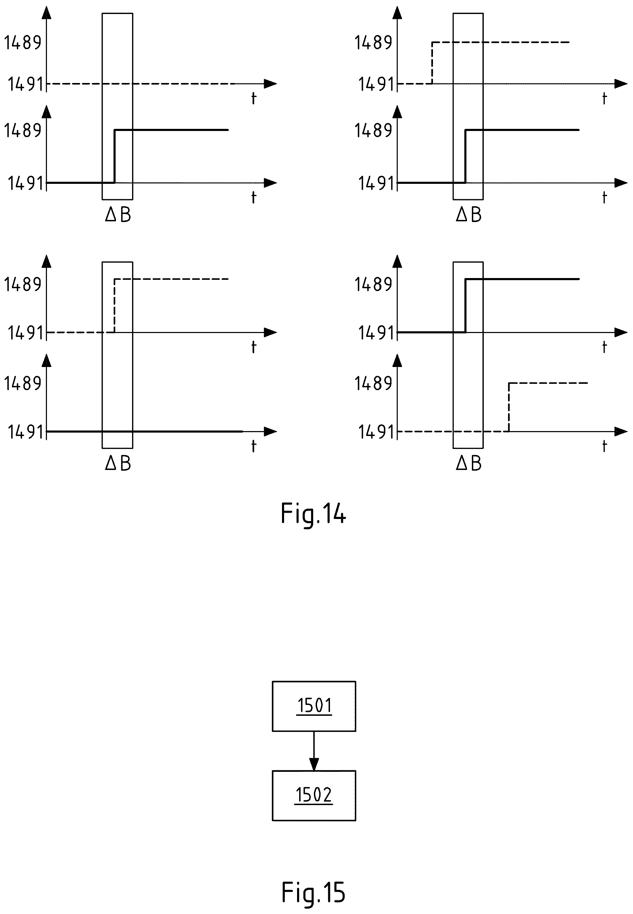

Vorzugsweise kann zusätzlich durch die Detektionseinrichtung ein Abgleich der erfassten zeitabhängigen und/oder positionsabhängigen elektrischen Signale und mechanischen Signale erfolgen. Dies ist in den Figuren 13 und 14 näher veranschaulicht. Mit dem Bezugszeichen 1389 (bzw. 1489) ist der verriegelte Zustand bezeichnet und mit dem Bezugszeichen 1391 (bzw. 1491) der unverriegelte Zustand.

Die Figur 13 zeigt insbesondere den Fall, bei dem der Deckel (korrekt) verriegelt wurde. Insbesondere ist zu erkennen, dass nahezu zeitgleich durch die Detektionseinrichtung ein Verriegelungszustand durch Auswerten des mindestens einen Sensorsignals bzw. ersten Sensordatums (wie beschrieben wurde) (oberer Ausschnitt der Figur 13) und des mindestens einen Deckelantriebsparameters (wie beschrieben wurde) (unterer Ausschnitt der Figur 13) bestimmt wurde. Eine ausreichende Zeitgleichheit liegt insbesondere dann vor, wenn der jeweilige Zustandswechsel innerhalb eines vordefinierten Zeitfensters ΔB bzw. Toleranzbereichs ΔB detektiert wird.

Insbesondere kann ein Deckel nur dann durch die Detektionseinrichtung als (korrekt) verriegelt bewertet werden, also ein Verriegelungszustand bestimmt werden, wenn die Signale beider Erkennungspfade innerhalb des Toleranzbereichs ΔB von dem Zustand "entriegelt" auf den Zustand "verriegelt" wechseln (vgl. Fig. 13).

In der Figur 14 sind vier beispielhafte Signalverläufe dargestellt, bei denen ein Deckel durch die Detektionseinrichtung als nicht (korrekt) verriegelt bewertet wird, also ein Nicht-Verriegelungszustand bestimmt wird. Wie zu erkennen ist, wechselt in keinem der gezeigten Fälle der Zustand "entriegelt" auf den Zustand "verriegelt" in dem vordefinierten Zeitraum.

Die Figur 15 zeigt ein Diagramm eines Ausführungsbeispiels eines Verfahrens gemäß der vorliegenden Anmeldung zum Bestimmen eines Verriegelungszustands bei einer Gefäßanordnung gemäß einer der vorherigen Ausführungsbeispiele.

In einem ersten Schritt 1501 erfolgt ein Erhalten, durch eine Detektionseinrichtung, eines durch das magnetfeldbasierte Sensorelement ausgegebenen ersten Sensordatums, wie bereits beschrieben wurde.

In einem weiteren Schritt 1502 erfolgt ein Detektieren, durch die Detektionseinrichtung, eines Verriegelungszustands der Gefäßanordnung, basierend auf dem erfassten ersten Sensordatum und mindestens einem Verriegelungskriterium, wie bereits beschrieben wurde.

### Bezugszeichenliste

100, 200, 300, 500, 700, 800, 900, 1100 Gefäßanordnung
102, 202, 302, 502, 602, 702, 802, 902, 1002, 1102 Topf
303 Topfrand
104, 204, 304, 504, 704, 804, 904, 1104 Deckel
305 Deckelrand
106, 206, 306 Boden
108, 208, 308, 508, 608, 708, 808, 908, 1008, 1108 Gegenelement
, 210, 510, 610, 710, 810, 910, 1010, Gegenelement
112, 212, 312, 512, 612, 712, 812, 912, 1012, 1112 Sensorelement
214, 514, 614, 714, 814, 914, 1014 Sensorelement
215, 515, 715, 815 Messmodul
116, 216, 316, 516, 716, 816, 916, 1116 Topfverbindung
217, 517, 817 Messmodul
218, 518, 818 Topfverbindung
219, 519, 719, 819 Auswertemodul
120, 220, 320, 520, 720, 820, 1120 unterer Topfkontakt
221, 521, 821 unterer Topfkontakt
222, 822 unterer Topfkontakt
223, 523, 723, 823 unterer Topfkontakt
124 Topfwandung
126, 226, 526, 726, 826, 926, 1126 Detektionseinrichtung
228, 528, 828 Topfverbindung
229, 529, 729, 829, 929 Topfverbindung
230, 530, 730, 830, 930, 1130 Küchengerät
232, 532, 732, 832, 932, 1132 Gerätebasis
234, 534, 734, 834, 934, 1134 Topfaufnahme
236, 536, 736, 1136 Basiskontakt
237, 537 Basiskontakt
238 Basiskontakt
239, 539, 739 Basiskontakt
340 Joch
342 Topfabschnitt
343 ringförmiger Teilabschnitt des Topfabschnitts
346 Wicklung
353, 355 Enden des Jochs
560, 760, 1160 Werkzeugantrieb
661 offene Deckelposition
562, 762, 1162 Küchengerätwerkzeug
663 Deckelposition während des Schließvorgangs
665 verriegelte Deckelposition
566, 766, 1166 Anzeige
667 Deckelposition
751 Topfverbindung
857 Kommunikationsmodul
1071 Signalverlauf der Sensoren
1073 Deckel lose aufgelegt
1075 Deckel während Verriegelungsbewegung
1077 Deckel verriegelt
1170 Verriegelungsmechanismus
1172 mechanische Kopplung
1174 Deckelantrieb
1280, 1282, 1284 Endpositionen
1281 nicht verriegelt
1283 verriegelt
1285 kein Deckel vorhanden
1287 Position des Deckelantriebs
1389, 1489 verriegelt
1391, 1491 verriegelt

## Patentansprüche

1. Gefäßanordnung (100, 200, 300, 500, 700, 800, 900, 1100) für ein Küchengerät (230, 530, 730, 830, 930, 1130), umfassend:
- ein Speiseaufnahmeelement (102, 202, 302, 502, 602, 702, 802, 902, 1002, 1102), und
- mindestens einen Deckel (104, 204, 304, 504, 704, 804, 904, 1104), eingerichtet zum Verschließen einer Öffnung des Speiseaufnahmeelements (102, 202, 302, 502, 602, 702, 802, 902, 1002, 1102),
- wobei der Deckel (104, 204, 304, 504, 704, 804, 904, 1104) relativ zu dem Speiseaufnahmeelement (102, 202, 302, 502, 602, 702, 802, 902, 1002, 1102) zwischen einer ersten Betriebsposition und einer zweiten sich von der ersten Betriebsposition unterscheidenden Betriebsposition bewegbar ist, **dadurch gekennzeichnet, dass**
- der Deckel (104, 204, 304, 504, 704, 804, 904, 1104) mindestens ein erstes magnetfeldbasiertes Gegenelement (108, 208, 210, 308, 508, 510, 608, 610, 708, 710, 808, 810, 908, 910, 1008, 1010, 1108) aufweist,
- das Speiseaufnahmeelement (102, 202, 302, 502, 602, 702, 802, 902, 1002, 1102) mindestens ein mit einer Detektionseinrichtung (126, 226, 526, 726, 826, 926, 1126) verbindbares magnetfeldbasiertes Sensorelement (112, 212, 214, 312, 512, 514, 612, 614, 712, 714, 812, 814, 912, 914, 1012, 1014, 1112) aufweist, wobei die Detektionseinrichtung (126, 226, 526, 726, 826, 926, 1126) eingerichtet ist zum Detektieren eines zweiten Betriebszustands des Deckels (104, 204, 304, 504, 704, 804, 904, 1104), basierend auf einem ersten Sensordatum,
- wobei das magnetfeldbasierte Sensorelement (112, 212, 214, 312, 512, 514, 612, 614, 712, 714, 812, 814, 912, 914, 1012, 1014, 1112) eingerichtet ist zum Ausgeben des ersten Sensordatums nur bei einer Detektion des ersten magnetfeldbasierten Gegenelements (108, 208, 210, 308, 508, 510, 608, 610, 708, 710, 808, 810, 908, 910, 1008, 1010, 1108) in dem Erfassungsbereich des magnetfeldbasierten Sensorelements (112, 212, 214, 312, 512, 514, 612, 614, 712, 714, 812, 814, 912, 914, 1012, 1014, 1112), und
- wobei das mindestens eine erste magnetfeldbasierte Gegenelement (108, 208, 210, 308, 508, 510, 608, 610, 708, 710, 808, 810, 908, 910, 1008, 1010, 1108) in dem Deckel (104, 204, 304, 504, 704, 804, 904, 1104) derart angeordnet ist, dass das magnetfeldbasierte Gegenelement (108, 208, 210, 308, 508, 510, 608, 610, 708, 710, 808, 810, 908, 910, 1008, 1010, 1108) zumindest dann in dem Erfassungsbereich des magnetfeldbasierten Sensorelements (112, 212, 214, 312, 512, 514, 612, 614, 712, 714, 812, 814, 912, 914, 1012, 1014, 1112) ist, wenn sich der Deckel (104, 204, 304, 504, 704, 804, 904, 1104) in der zweiten Betriebsposition befindet.

2. Gefäßanordnung (100, 200, 300, 500, 700, 800, 900, 1100) nach Anspruch 1,
**dadurch gekennzeichnet, dass**
- das Speiseaufnahmeelement (102, 202, 302, 502, 602, 702, 802, 902, 1002, 1102) mindestens zwei an einem oberen Topfrand des Speiseaufnahmeelements (102, 202, 302, 502, 602, 702, 802, 902, 1002, 1102) angeordnete magnetfeldbasierte Sensorelemente (112, 212, 312, 512, 612, 712, 812, 912, 1012, 1112) aufweist,
- wobei die zwei magnetfeldbasierten Sensorelemente (112, 212, 312, 512, 612, 712, 812, 912, 1012, 1112) an im Wesentlichen gegenüberliegenden Seiten des Topfrands angeordnet sind,
und
- der Deckel (104, 204, 304, 504, 704, 804, 904, 1104) mindestens zwei erste an einem Deckelrand angeordnete magnetfeldbasierte Gegenelemente (108, 208, 308, 508, 608, 708, 808, 908, 1008, 1108) aufweist,
- wobei die zwei magnetfeldbasierten Gegenelemente (108, 208, 308, 508, 608, 708, 808, 908, 1008, 1108) an im Wesentlichen gegenüberliegenden Seiten des Deckelrands angeordnet sind.

3. Gefäßanordnung (100, 200, 300, 500, 700, 800, 900, 1100) nach Anspruch 1 oder 2, **dadurch gekennzeichnet, dass**
- der Deckel (104, 204, 304, 504, 704, 804, 904, 1104) mindestens ein magnetfeldbasiertes Zusatzgegenelement (1052, 1054) aufweist,
- wobei die Detektionseinrichtung (126, 226, 526, 726, 826, 926, 1126) eingerichtet ist zum Detektieren eines ersten Betriebszustands des Deckels (104, 204, 304, 504, 704, 804, 904, 1104), basierend auf einem zweiten Sensordatum,
- wobei das magnetfeldbasierte Sensorelement (112, 212, 214, 312, 512, 514, 612, 614, 712, 714, 812, 814, 912, 914, 1012, 1014, 1112) eingerichtet ist zum Ausgeben des zweiten Sensordatums nur bei einer Detektion des magnetfeldbasierten Zusatzgegenelements (1052, 1054) in dem Erfassungsbereich des magnetfeldbasierten Sensorelements (112, 212, 214, 312, 512, 514, 612, 614, 712, 714, 812, 814, 912, 914, 1012, 1014, 1112), und
- wobei das mindestens eine magnetfeldbasierte Zusatzgegenelement (1052, 1054 in dem Deckel (104, 204, 304, 504, 704, 804, 904, 1104) derart angeordnet ist, dass das magnetfeldbasierte Zusatzgegenelement (1052, 1054) nur dann in dem Erfassungsbereich des magnetfeldbasierten Sensorelements (112, 212, 214, 312, 512, 514, 612, 614, 712, 714, 812, 814, 912, 914, 1012, 1014, 1112) ist, wenn sich der Deckel (104, 204, 304, 504, 704, 804, 904, 1104) in der zweiten Betriebsposition befindet.

4. Gefäßanordnung (100, 200, 300, 500, 700, 800, 900, 1100) nach einem der vorherigen Ansprüche, **dadurch gekennzeichnet, dass**
- das mindestens eine magnetfeldbasierte Sensorelement (112, 212, 214, 312, 512, 514, 612, 614, 712, 714, 812, 814, 912, 914, 1012, 1014, 1112) eine Spule ist, und
- das mindestens eine erste magnetfeldbasierte Gegenelement (108, 208, 210, 308, 508, 510, 608, 610, 708, 710, 808, 810, 908, 910, 1008, 1010, 1108) ein aus einem induktivitätsbeeinflussenden Material gebildetes Induktionselement ist.

5. Gefäßanordnung (100, 200, 300, 500, 700, 800, 900, 1100) nach Anspruch 4,
**dadurch gekennzeichnet, dass**
- die Gefäßanordnung (100, 200, 300, 500, 700, 800, 900, 1100) zumindest einen ersten Deckel (104, 204, 304, 504, 704, 804, 904, 1104) und einen zweiten sich von dem ersten Deckel (104, 204, 304, 504, 704, 804, 904, 1104) unterscheidenden Deckel (104, 204, 304, 504, 704, 804, 904, 1104) umfasst,
- wobei sich das mindestens eine erste Induktionselement des ersten Deckels (104, 204, 304, 504, 704, 804, 904, 1104) und das mindestens eine zweite Induktionselement des zweiten Deckels (104, 204, 304, 504, 704, 804, 904, 1104) voneinander unterscheiden.

6. Gefäßanordnung 100, 200, 300, 500, 700, 800, 900, 1100 nach Anspruch 4 oder 5, **dadurch gekennzeichnet, dass**
- die Spule eine Spulenkern in Form eines U-förmigen Jochs und mindestens eine um den Spulenkern gewickelte Spulenwicklung aufweist,
- wobei das Speiseaufnahmeelement (102, 202, 302, 502, 602, 702, 802, 902, 1002, 1102) eine Spulenabdeckung aufweist, und
- nur die Enden des U-förmigen Jochs durch eine jeweilige Öffnung in der Spulenabdeckung ragen.

7. Gefäßanordnung (100, 200, 300, 500, 700, 800, 900, 1100) nach einem der vorherigen Ansprüche 4 bis 6, **dadurch gekennzeichnet, dass**
- das Speiseaufnahmeelement (102, 202, 302, 502, 602, 702, 802, 902, 1002, 1102) mindestens zwei Spulen aufweist,
- wobei das Speiseaufnahmeelement (102, 202, 302, 502, 602, 702, 802, 902, 1002, 1102) zwischen einem ersten Spulenkontakt der ersten Spule und einem ersten unteren Topfkontakt eine erste elektrische Topfverbindung aufweist,
- wobei das Speiseaufnahmeelement (102, 202, 302, 502, 602, 702, 802, 902, 1002, 1102) zwischen einem zweiten Spulenkontakt der zweiten Spule und einem zweiten unteren Topfkontakt eine zweite elektrische Topfverbindung aufweist,
- wobei das Speiseaufnahmeelement (102, 202, 302, 502, 602, 702, 802, 902, 1002, 1102) zwischen einem zweiten Spulenkontakt der ersten Spule und einem ersten Spulenkontakt der ersten Spule eine fünfte elektrische Topfverbindung aufweist, und
- wobei die zwei unteren Topfkontakte eingerichtet sind zum elektrischen Verbinden mit der Detektionseinrichtung (126, 226, 526, 726, 826, 926, 1126).

8. Gefäßanordnung (100, 200, 300, 500, 700, 800, 900, 1100) nach einem der vorherigen Ansprüche, **dadurch gekennzeichnet, dass**
- das mindestens eine magnetfeldbasierte Sensorelement (112, 212, 214, 312, 512, 514, 612, 614, 712, 714, 812, 814, 912, 914, 1012, 1014, 1112) ein Magnetfeldsensor ist, und
- das mindestens eine magnetfeldbasierte Gegenelement (108, 208, 210, 308, 508, 510, 608, 610, 708, 710, 808, 810, 908, 910, 1008, 1010, 1108) ein Magnet ist.

9. Gefäßanordnung (100, 200, 300, 500, 700, 800, 900, 1100) nach Anspruch 8,
**dadurch gekennzeichnet, dass**
- die Gefäßanordnung (100, 200, 300, 500, 700, 800, 900, 1100) zumindest einen ersten Deckel (104, 204, 304, 504, 704, 804, 904, 1104) und einen zweiten sich von dem ersten Deckel (104, 204, 304, 504, 704, 804, 904, 1104) unterscheidenden Deckel (104, 204, 304, 504, 704, 804, 904, 1104) umfasst,
- wobei der mindestens eine erste Magnet des ersten Deckels (104, 204, 304, 504, 704, 804, 904, 1104) in dem ersten Deckel (104, 204, 304, 504, 704, 804, 904, 1104) angeordnet ist, derart, dass der Magnetfeldsensor in der zweiten Betriebsposition des ersten Deckels (104, 204, 304, 504, 704, 804, 904, 1104) ein erstes Magnetfeld mit einer ersten Magnetfeldrichtung detektiert, und
- wobei der mindestens eine zweite Magnet des zweiten Deckels (104, 204, 304, 504, 704, 804, 904, 1104) an dem zweiten Deckel (104, 204, 304, 504, 704, 804, 904, 1104) angeordnet ist, derart, dass der Magnetfeldsensor in der zweiten Betriebsposition des zweiten Deckels (104, 204, 304, 504, 704, 804, 904, 1104) ein zweites Magnetfeld mit einer zweiten sich von der ersten Magnetfeldrichtung unterscheidenden Magnetfeldrichtung detektiert.

10. Küchengerät (230, 530, 730, 830, 930, 1130), umfassend:
- eine Gefäßanordnung (100, 200, 300, 500, 700, 800, 900, 1100) nach einem der vorherigen Ansprüche, und
- eine Gerätebasis (232, 532, 732, 832, 932, 1132), umfassend eine mit dem mindestens einen magnetfeldbasierten Sensorelement (112, 212, 214, 312, 512, 514, 612, 614, 712, 714, 812, 814, 912, 914, 1012, 1014, 1112) des Speiseaufnahmeelements (102, 202, 302, 502, 602, 702, 802, 902, 1002, 1102) der Gefäßanordnung (100, 200, 300, 500, 700, 800, 900, 1100) verbindbare Detektionseinrichtung (126, 226, 526, 726, 826, 926, 1126),
- wobei die Detektionseinrichtung (126, 226, 526, 726, 826, 926, 1126) eingerichtet ist zum Detektieren eines zweiten Betriebszustands des Deckels (104, 204, 304, 504, 704, 804, 904, 1104) der Gefäßanordnung (100, 200, 300, 500, 700, 800, 900, 1100), basierend zumindest auf dem ersten ausgegebenen Sensordatum.

11. Küchengerät (230, 530, 730, 830, 930, 1130) nach Anspruch 10, **dadurch gekennzeichnet, dass**
- eine Mehrzahl von Deckeltypkriterien vordefiniert ist und jedem der Deckeltypkriterien ein Deckeltyp zugeordnet ist, und
- die Detektionseinrichtung (126, 226, 526, 726, 826, 926, 1126) eingerichtet ist zum Identifizieren des Deckeltyps, basierend auf mindestens einem von dem mindestens einen magnetfeldbasierten Sensorelement (112, 212, 214, 312, 512, 514, 612, 614, 712, 714, 812, 814, 912, 914, 1012, 1014, 1112) erhaltenen Sensorsignal und den Deckeltypkriterien.

12. Küchengerät (230, 530, 730, 830, 930, 1130) nach Anspruch 11, **dadurch gekennzeichnet, dass**
- die Detektionseinrichtung (126, 226, 526, 726, 826, 926, 1126) eingerichtet ist zum Bestimmen mindestens eines Induktivitätswerts aus mindestens einem von einer Spule erhaltenen Sensorsignal, und/oder
- die Detektionseinrichtung (126, 226, 526, 726, 826, 926, 1126) eingerichtet ist zum Bestimmen mindestens eines Induktivitätswerteverlaufs aus mindestens einem von einer Spule erhaltenen Sensorsignal, und/oder
- die Detektionseinrichtung (126, 226, 526, 726, 826, 926, 1126) eingerichtet ist zum Bestimmen mindestens eines Signalmusters aus mindestens einem von einem Magnetfeldsensor erhaltenen Sensorsignal, und/oder
- die Detektionseinrichtung (126, 226, 526, 726, 826, 926, 1126) eingerichtet ist zum Bestimmen mindestens eines Signalmusterverlaufs aus mindestens einem von einem Magnetfeldsensor erhaltenen Sensorsignal.

13. Küchengerät (230, 530, 730, 830, 930, 1130) nach einem der vorherigen Ansprüche 10 bis 12, **dadurch gekennzeichnet, dass**
- das Küchengerät (230, 530, 730, 830, 930, 1130) einen Deckelantrieb umfasst, eingerichtet zum Verfahren eines Deckels (104, 204, 304, 504, 704, 804, 904, 1104) zumindest zwischen der ersten Betriebsposition und der zweiten Betriebsposition,
- wobei die Detektionseinrichtung (126, 226, 526, 726, 826, 926, 1126) eingerichtet ist zum Erfassen von mindestens einem Deckelantriebsparameterwert, und
- wobei die Detektionseinrichtung (126, 226, 526, 726, 826, 926, 1126) eingerichtet ist zum Detektieren des zweiten Betriebszustands der Gefäßanordnung (100, 200, 300, 500, 700, 800, 900, 1100), basierend auf dem erfassten Deckelantriebsparameterwert und dem ersten Sensordatum.

14. Verfahren zum Bestimmen eines zweiten Betriebszustands bei einer Gefäßanordnung (100, 200, 300, 500, 700, 800, 900, 1100) nach einem der Ansprüche 1 bis 9, umfassend:
- Erhalten, durch eine Detektionseinrichtung (126, 226, 526, 726, 826, 926, 1126), eines durch das magnetfeldbasierte Sensorelement (112, 212, 214, 312, 512, 514, 612, 614, 712, 714, 812, 814, 912, 914, 1012, 1014, 1112) ausgegebenen ersten Sensordatums, und
- Detektieren, durch die Detektionseinrichtung (126, 226, 526, 726, 826, 926, 1126), des zweiten Betriebszustands der Gefäßanordnung, basierend auf dem erfassten ersten Sensordatum und mindestens einem Positionskriterium.

15. Erster Deckel (104, 204, 304, 504, 704, 804, 904, 1104) eines ersten Deckeltyps für eine Gefäßanordnung (100, 200, 300, 500, 700, 800, 900, 1100) für ein Küchengerät (230, 530, 730, 830, 930, 1130), insbesondere für eine Gefäßanordnung (100, 200, 300, 500, 700, 800, 900, 1100) nach einem der vorherigen Ansprüche,
- wobei der erste Deckel (104, 204, 304, 504, 704, 804, 904, 1104) eingerichtet ist zum Verschließen einer Öffnung eines Speiseaufnahmeelements (102, 202, 302, 502, 602, 702, 802, 902, 1002, 1102) der Gefäßanordnung (100, 200, 300, 500, 700, 800, 900, 1100),
- wobei der erste Deckel (104, 204, 304, 504, 704, 804, 904, 1104) relativ zu dem Speiseaufnahmeelement (102, 202, 302, 502, 602, 702, 802, 902, 1002, 1102) zwischen einer ersten Betriebsposition und einer zweiten sich von der ersten Betriebsposition unterscheidenden Betriebsposition bewegbar ist,
- wobei der erste Deckel (104, 204, 304, 504, 704, 804, 904, 1104) eine Mehrzahl von ersten magnetfeldbasierten Gegenelementen (108, 208, 210, 308, 508, 510, 608, 610, 708, 710, 808, 810, 908, 910, 1008, 1010, 1108) in Form einer Mehrzahl von ersten Magneten aufweist,
- wobei die Mehrzahl der ersten Magnete in einer ersten Polpositionskombination in dem ersten Deckel (108, 208, 210, 308, 508, 510, 608, 610, 708, 710, 808, 810, 908, 910, 1008, 1010, 1108) angeordnet ist,
- wobei der erste Deckeltyp des ersten Deckels (104, 204, 304, 504, 704, 804, 904, 1104) anhand der ersten Polpositionskombination identifizierbar ist
